# EUROPEAN PATENT APPLICATION

(11) **EP 3 354 699 A1**
(43) Date of publication of application: **01.08.2018**
(21) Application number: 16848456.6
(22) Date of filing: 26.08.2016
(51) Int. Cl.: C09D 17/00, B41J 2/01, B41M 5/00, C09B 67/20, C09D 11/326

(54) **AQUEOUS PIGMENT DISPERSION, PROCESS FOR PRODUCING SAME, COLORING COMPOSITION, INK COMPOSITION, INK COMPOSITION FOR INK-JET RECORDING, AND INK-JET RECORDING METHOD**

(30) Priority: 25.09.2015 JP 2015189007
(71) Applicant: FUJI-FILM Corporation, Minato-ku Tokyo 106-8620 (JP)
(72) Inventor: TATEISHI Keiichi, Ashigarakami-gun Kanagawa 258-8577 (JP); SASAKI Hiroki, Ashigarakami-gun Kanagawa 258-8577 (JP); NAGATA Yoshiaki, Ashigarakami-gun Kanagawa 258-8577 (JP)
(74) Representative: Hughes, Andrea Michelle
(86) International application number: PCT/JP2016/075085
(87) International publication number: WO 2017/051668

(57) **Abstract**

The present invention provides: an aqueous pigment dispersion characterized by comprising a first dispersant, a second dispersant, water, and an azo pigment which is represented by formula (1) given in the description and which, in analysis by diffractometry with CuKα characteristic X-ray, shows characteristic X-ray diffraction peaks at least at Bragg angles (2θ±0.2°) of 4.8°, 7.2°, 9.7°, 20.0°, 17.3°, 26.0°, and 26.7° and/or a tautomer of the azo pigment and characterized by being obtained via the following step b; a process for producing the aqueous pigment dispersion; a coloring composition comprising the aqueous pigment dispersion; an ink composition; an ink composition for ink-jet recording; and an ink-jet recording method which comprises using the ink composition for ink-jet recording. Step b: a step in which an azo pigment represented by formula (1) and/or a tautomer thereof, a first dispersant, and a second dispersant are dispersed in water to obtain an aqueous pigment dispersion.

## Description

### BACKGROUND OF THE INVENTION

### 1. Field of the Invention

The present invention relates to an aqueous pigment dispersion, a method for producing the same, a coloring composition, an ink composition, an ink composition for inkjet recording, and an inkjet recording method.

### 2. Description of the Related Art

In recent years, regarding image recording materials, materials for forming color images, in particular, are part of the mainstream, and specifically, recording materials for an inkjet method, recording materials for a thermosensitive transfer method, recording materials for an electrophotographic method, transfer type silver halide photosensitive materials, printing inks, recording pens, and the like are actively utilized. Furthermore, color filters are used to record and reproduce color images in image pickup elements, such as charge-coupled devices (CCD) in the realm of photographing devices, and in liquid crystal displays (LCD) or plasma displays (PDP) in the realm of display devices. In these color image recording materials or color filters, coloring agents (dyes or pigments) of three primary colors under a so-called additive color mixing method or subtractive color mixing method are used in order to display or record full-color images.

Azo pigments have excellent hues and tinctorial power, which are chromatic characteristics, and therefore, azo pigments have been widely used in printing inks, ink compositions for inkjet recording, electrophotographic materials, and the like.

In a case in which pigments are used as coloring agents in various coloring compositions, it is important to secure dispersibility and dispersion stability of pigments, which are solids.

From the viewpoints of pollution prevention and occupational health, there is a strong orientation toward the replacement with water-based agents in the industrial fields where coloring agents such as coating materials and printing inks are used. In stationary such as ballpoint pens and felt-tipped pens that are used for recording of information, and in recording liquids for printers, plotters, and the like, which are represented by an inkjet method, replacement with water-based agents is in progress from the viewpoints of toxicity and hygiene.

In recent years, aqueous dispersions obtained by dispersing solids that are insoluble in water, such as pigments, are widely utilized as ink compositions for inkjet recording, and the like.

Regarding conventional pigment dispersions, those described in JP2011-46870A and JP2011-74376A are known.

### SUMMARY OF THE INVENTION

An object of the invention to be addressed is to provide an aqueous pigment dispersion having excellent storage stability and image fastness, and a method for producing the dispersion. Another object of the invention to be addressed is to provide a coloring composition, an ink composition, and an ink composition for inkjet recording, all being produced using the aqueous pigment dispersion, and an inkjet recording method of using the ink composition for inkjet recording.

The objects of the invention described above were addressed by the following means:
[1] An aqueous pigment dispersion, comprising at least one of an azo pigment represented by the following Formula (1) and showing characteristic X-ray diffraction peaks at least at Bragg's angles (2θ ± 0.2°) of 4.8°, 7.2°, 9.7°, 20.0°, 17.3°, 26.0°, and 26.7° in CuKα characteristic X-ray diffraction, and a tautomer thereof; a first dispersant; a second dispersant; and water, in which the aqueous pigment dispersion is obtained via the following Step b:
   Step b: a step of dispersing an azo pigment represented by Formula (I) and/or a tautomer thereof, a first dispersant, and a second dispersant in water and thereby obtaining an aqueous pigment dispersion, 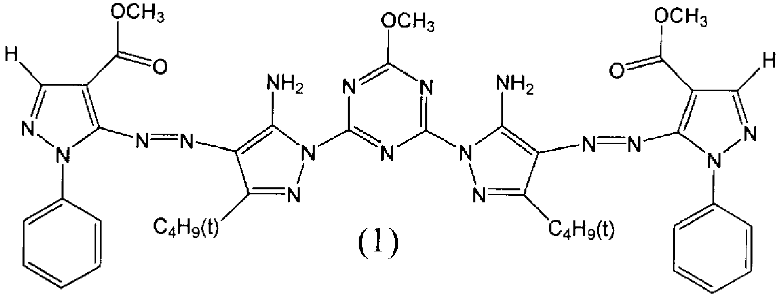
[2] The aqueous pigment dispersion according to [1], in which the aqueous pigment dispersion is obtained via Step a: a step of mixing at least one of the azo pigment represented by Formula (1) and a tautomer thereof, the first dispersant, the second dispersant, and water, before Step b.
[3] The aqueous pigment dispersion according to [1] or [2], in which at least one of the first dispersant or the second dispersant is a high molecular dispersant.
[4] The aqueous pigment dispersion according to any one of [1] to [3], in which
   the first dispersant has an amine value of 5 mg KOH/g or more, with the amine value being larger than the acid value, and
   the second dispersant is a long-chain fatty acid salt or has an acid value of 5 mg KOH/g or more, with the acid value being larger than or equal to the amine value.
[5] The aqueous pigment dispersion according to any one of [1] to [4], in which the aqueous pigment dispersion is obtained further via Step c: a step of adjusting the electrical conductivity of the aqueous pigment dispersion to 100 µS/cm or less, after Step b.
[6] The aqueous pigment dispersion according to any one of [1] to [5], in which the aqueous pigment dispersion comprises the dispersants in a total amount of 10 to 90 parts by mass with respect to 100 parts by mass of the content of at least one of the azo pigment represented by Formula (1) and a tautomer thereof.
[7] The aqueous pigment dispersion according to any one of [1] to [6], in which at least one of the azo pigment represented by Formula (1) and a tautomer thereof has not been treated by salt milling.
[8] A method for producing an aqueous pigment dispersion, the method comprising at least the following Step b:
   Step b: a step of dispersing at least one of an azo pigment represented by Formula (1) and a tautomer thereof, a first dispersant, and a second dispersant in water and thereby obtaining an aqueous pigment dispersion, 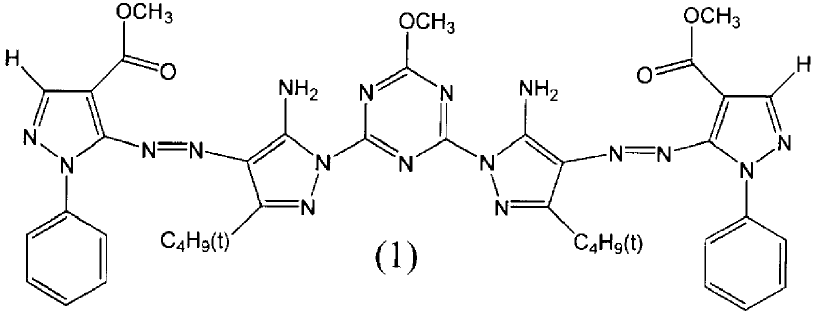
[9] The method for producing an aqueous pigment dispersion according to [8], in which the method comprises Step a: a step of mixing at least one of the azo pigment represented by Formula (1) and a tautomer thereof, the first dispersant, the second dispersant, and water, before Step b.
[10] The method for producing an aqueous pigment dispersion according to [8] or [9], in which
   the first dispersant has an amine value of 5 mg KOH/g or more, with the amine value being larger than the acid value, and
   the second dispersant is a long-chain fatty acid salt or has an acid value of 5 mg KOH/g or more, with the acid value being larger than or equal to the amine value.
[11] The method for producing an aqueous pigment dispersion according to any one of [8] to [10], further comprising: Step c: a step of adjusting the electrical conductivity of the aqueous pigment dispersion to 100 µS/cm or less, after Step b.
[12] A coloring composition comprising the aqueous pigment dispersion according to any one of [1] to [7].
[13] An ink composition comprising the aqueous pigment dispersion according to any one of [1] to [7].
[14] The ink composition according to [13], in which the ink composition is an ink composition for inkjet recording.
[15] An inkjet recording method, comprising a step of jetting the ink composition for inkjet recording according to [14] onto a recording medium.

According to the present invention, an aqueous pigment dispersion having excellent storage stability and image fastness, and a method for producing the dispersion can be provided. Furthermore, a coloring composition, an ink composition, and an ink composition for inkjet recording, all of which use the aqueous pigment dispersion described above, and an inkjet recording method of using the ink composition for inkjet recording described above can be provided.

### BRIEF DESCRIPTION OF THE DRAWINGS

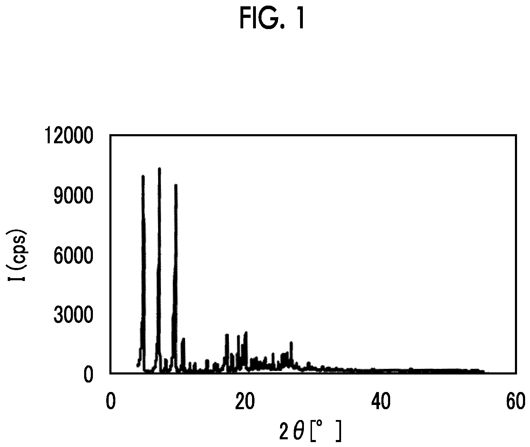

Fig. 1 is a diagram showing the X-ray diffraction results of an azo pigment (1) synthesized in Synthesis Example 1.

### DESCRIPTION OF THE PREFERRED EMBODIMENTS

In the following description, the matters of the invention will be described in detail. The explanation of the configuration requirements described below may be made based on representative embodiments of the invention; however, the invention is not intended to be limited to such embodiments. The term "to" used in the present specification is used to mean to include numerical values that are described before and after the symbol as the lower limit and the upper limit.

In regard to the description of a group (atomic group) according to the present specification, a description that does not indicate the status of being substituted or unsubstituted is to include a group that does not have a substituent as well as a group having a substituent. For example, the description "alkyl group" includes an alkyl group that does not have a substituent (unsubstituted alkyl group), as well as an alkyl group having a substituent (substituted alkyl group).

Furthermore, there are occasions in which a chemical structural formula according to the present specification is described as a simple structural formula, with hydrogen atoms being omitted.

According to the invention, the units "percent (%) by mass" and "percent (%) by weight" have the same meaning, and the units "parts by mass" and "parts by weight" have the same meaning.

According to the invention, combinations of preferred embodiments are more preferred.

### (Aqueous pigment dispersion and method for producing same)

The aqueous pigment dispersion of the invention comprises at least one of an azo pigment represented by the following Formula (1) and showing characteristic X-ray diffraction peaks at least at Bragg's angles (2θ ± 0.2°) of 4.8°, 7.2°, 9.7°, 20.0°, 17.3°, 26.0°, and 26.7° in CuKα characteristic X-ray diffraction, and a tautomer thereof; a first dispersant; a second dispersant; and water, and the aqueous pigment dispersion is obtained via the following Step b:
Step b: a step of dispersing at least one of the azo pigment represented by Formula (1) and a tautomer thereof, the first dispersant, and the second dispersant in water, and thereby obtaining an aqueous pigment dispersion.

In the following description, at least one of an azo pigment represented by the following Formula (1) and showing characteristic X-ray diffraction peaks at least at Bragg's angles (2θ ± 0.2°) of 4.8°, 7.2°, 9.7°, 20.0°, 17.3°, 26.0°, and 26.7° in CuKα characteristic X-ray diffraction, and a tautomer thereof may also be referred to as "particular pigment" or "azo pigment represented by Formula (1) and/or a tautomer thereof".

According to the invention, measurement of X-ray diffraction of the azo pigment represented by Formula (1) can be carried out according to the Japanese Industrial Standards JIS K0131 (general rules for X-ray diffraction analysis), using an X-ray powder diffraction analyzer, RINT2500 (manufactured by Rigaku Corporation).

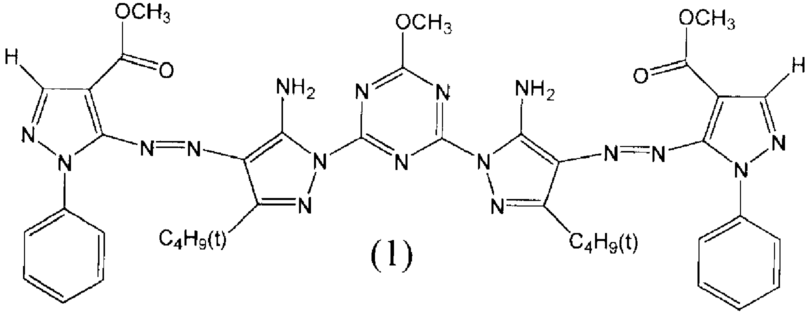

The method for producing an aqueous pigment dispersion of the invention includes at least the Step b described above.

That is, the aqueous dispersion of the invention is an aqueous dispersion obtained by the method for producing an aqueous dispersion of the invention, and the various components of the aqueous dispersion and the various steps used in the method for producing the aqueous dispersion are commonly shared, while preferred embodiments thereof are also similar.

The inventors of the present invention found that the azo pigment represented by Formula (1) and/or a tautomer thereof (particular pigment) exhibits especially excellent light resistance and color reproducibility compared to Pigment Yellow 74 (C.I. Pigment Yellow 74), which is a yellow pigment that is generally used for inkjet applications, and the like. However, in the conventional methods, it has been difficult to obtain an aqueous pigment dispersion having excellent storage stability using the particular pigment.

The inventors of the present invention conducted a thorough investigation, and as a result, the inventors found that an aqueous pigment dispersion having excellent dispersion stability is obtained by using a plurality of dispersants in combination, thus completing the invention.

Detailed operating mechanism for the effects described above is not clearly understood; however, it is speculated that by using a plurality of dispersants in combination, the "adsorption of dispersants to a pigment" and "repulsion between pigment particles to which dispersants have adsorbed", which are necessary for enhancing the storage stability of a pigment dispersion, came to be satisfied simultaneously. It is speculated that excellent storage stability is obtained by using a plurality of dispersants, particularly a plurality of particular dispersants, in combination.

Hereinafter, the various components used in the aqueous dispersion of the invention will be explained.

### <Azo pigment represented by Formula (1) and/or tautomer thereof>

The aqueous pigment dispersion of the invention includes an azo pigment represented by Formula (1) and showing characteristic X-ray diffraction peaks at least at Bragg's angles (2θ ± 0.2°) of 4.8°, 7.2°, 9.7°, 20.0°, 17.3°, 26.0°, and 26.7° in CuKα characteristic X-ray diffraction, and/or a tautomer thereof (particular pigment). The azo pigment and/or a tautomer thereof may be a salt, a hydrate, or a solvate of the azo pigment or the tautomer.

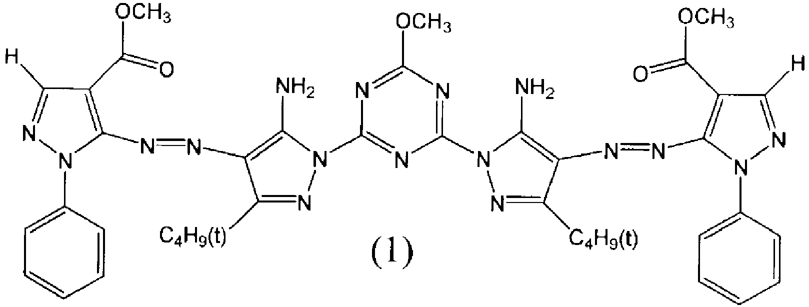

In regard to the pigment represented by Formula (1), the pigment may also be a hydrate containing water molecules in the crystal, or a solvate containing a solvent (for example, an alcohol such as methanol, ethanol, 2-propanol, or 1-butyl alcohol; a ketone such as acetone or methyl ethyl ketone; or an aprotic solvent such as acetonitrile, dimethyl sulfoxide, dimethylformamide, dimethylacetamide, N-methylpyrrolidone, or toluene).

Furthermore, in regard to the pigment represented by Formula (1), a tautomer as shown in Scheme 1 (for example, a tautomer of azohydrazone) is also included in these formulae in the invention. Meanwhile, (t)C₄H₉ represents a t-butyl group.

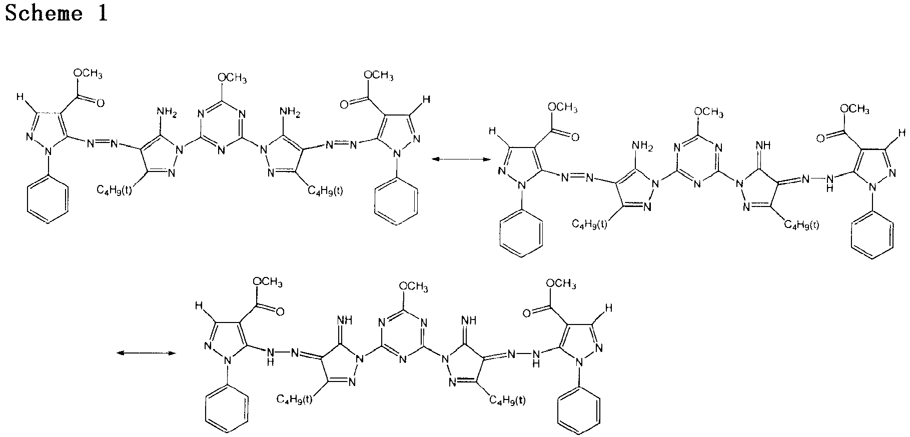

A geometric isomer of the pigment represented by Formula (1) may also be included as a minor component.

### [Synthesis of particular pigment]

The particular pigment can be synthesized by a known method.

The product thus obtainable is treated according to a post-treatment method of a conventional organic synthesis reaction, and can be supplied after being purified or without being purified.

That is, for example, a product isolated from the reaction system can be supplied without being purified, or after performing purification operations such as recrystallization and salification, singly or in combination.

After completion of the reaction, a product that has been isolated, or a product that has been extracted with an organic solvent/aqueous solution is placed in water or ice and can be supplied without being purified, or after being subjected to purification operations such as recrystallization, crystallization, and salification singly or in combination. Meanwhile, at the time of being placed in water or ice, the reaction solvent may be distilled off in advance, or the product may be placed in water or ice without being distilled off. After being placed in water or ice, the product may be neutralized or does not need to be neutralized.

The particular pigment produced by the method described above (also referred to as crude particular pigment) may be subjected to a post-treatment as necessary. Examples of the method for this post-treatment include a pigment particle regulating process by means of milling treatment such as solvent salt milling, salt milling, dry milling, solvent milling, and acid pasting, a solvent heating treatment and the like; and a surface treatment process by means of a resin, a surfactant, a dispersant, and the like.

As a post-treatment represented by solvent salt milling or salt milling is carried out, the primary particle size can be reduced. Therefore, in order to process pigment particles into a more preferred form, it is preferable to perform solvent salt milling, salt milling, or dry milling, from the viewpoints of dispersibility and storage stability.

In regard to the method for producing an aqueous pigment dispersion of the invention, it is preferable that such a post-treatment, particularly solvent salt milling or salt milling, is not performed. In a case in which the method for producing an aqueous pigment dispersion of the invention is used, an aqueous pigment dispersion having sufficiently excellent storage stability is obtained even without performing such a post-treatment, and therefore, it is excellent in view of cost or simplicity of the process.

### [Solvent salt milling]

Regarding solvent salt milling, for example, a process of introducing a crude particular pigment, an inorganic salt, and an organic solvent that does not dissolve them into a kneading machine and performing kneading and grinding therein may be employed. Regarding the inorganic salt, a water-soluble inorganic salt can be suitably used, and for example, it is preferable to use an inorganic salt such as sodium chloride, potassium chloride, or sodium sulfate. It is more preferable to use an inorganic salt having an average particle size of 0.5 to 50 µm.

In regard to the amount of use of the inorganic salt, it is preferable that the amount of use is set to 3 to 20 times by mass, and more preferably 5 to 15 times by mass, with respect to the crude particular pigment. Regarding the organic solvent, a water-soluble organic solvent can be suitably used, and since the solvent is brought to a state of being easily evaporable by the temperature increase at the time of kneading, a high-boiling point solvent is preferred from the viewpoint of safety.

Examples of such an organic solvent include diethylene glycol, glycerin, ethylene glycol, propylene glycol, liquid polyethylene glycol, liquid polypropylene glycol, 2-(methoxymethoxy)ethanol, 2-butoxyethanol, 2-(isopentyloxy)ethanol, 2-(hexyloxy)ethanol, diethylene glycol monomethyl ether, diethylene glycol monoethyl ether, diethylene glycol monobutyl ether, triethylene glycol, triethylene glycol monomethyl ether, 1-methoxy-2-propanol, 1-ethoxy-2-propanol, dipropylene glycol, dipropylene glycol monomethyl ether, dipropylene glycol monomethyl ether, dipropylene glycol, and mixtures thereof. The amount of use of the water-soluble organic solvent is preferably 0.1 to 5 times by mass with respect to the crude azo pigment. The kneading temperature is preferably 20°C to 130°C, and particularly preferably 40°C to 110°C. Regarding the kneading machine, for example, a kneader or a MIX MULLER can be used.

### [Average primary particle size of particular pigment]

In a case in which primary particles of the particular pigment obtainable by the production method described above are observed with a transmission microscope, the length in the major axis direction is, as an average value, preferably from 0.01 µm to 20 µm, more preferably from 0.01 µm to 5 µm, even more preferably from 0.02 µm to 0.5 µm, particularly preferably from 0.02 µm to 0.2 µm, and most preferably from 0.03 µm to 0.15 µm.

In a case in which the average length in the major axis direction obtainable at the time of observing primary particles of the particular pigment with a transmission electron microscope is 0.01 µm or more, it is preferable because the specific surface area of the particles does not become too large, and excellent fastness to light or ozone is obtained. Furthermore, it is preferable because aggregation of primary particles is suppressed, and satisfactory dispersibility is obtained. Meanwhile, in a case in which the average length is 20 µm or less, on an occasion in which the particles are dispersed and adjusted to a desired volume average particle size, overdispersion does not occur, exposure of active surfaces is suppressed, and thus aggregation is suppressed. As a result, the aqueous pigment dispersion acquires excellent storage stability, and therefore, it is preferable.

That is, in a case in which the length in the major axis direction of the primary particles of the particular pigment is in the range described above, the particular pigment exhibits high fastness to light or ozone and excellent dispersibility, and an aqueous pigment dispersion thereof has excellent storage stability, which is preferable.

The total content of the azo pigment represented by Formula (1) and a tautomer thereof in the aqueous pigment dispersion of the invention is preferably 0.1% to 30% by mass, more preferably 0.5% to 25% by mass, even more preferably 1% to 20% by mass, and particularly preferably 5% to 15% by mass, with respect to the total mass of the aqueous pigment dispersion.

Furthermore, it is not intended to exclude incorporation of any pigment other than the particular pigment into the aqueous pigment dispersion of the invention; however, it is preferable that the content of any pigment other than the particular pigment is smaller than the content of the particular pigment. In a case in which the content of the particular pigment in the aqueous pigment dispersion is designated as 100 parts by mass, the content of a pigment other than the particular pigment is preferably less than 100 parts by mass, more preferably 50 parts by mass or less, even more preferably 30 parts by mass or less, and particularly preferably 5 parts by mass or less, and it is most preferable that the aqueous pigment dispersion does not contain any pigment other than the particular pigment.

The volume average particle size of the particular pigment in the aqueous pigment dispersion of the invention is preferably in the range of 20 to 250 nm, and more preferably in the range of 40 to 100 nm. In a case in which the volume average particle size is 20 nm or more, decoloration of printed materials is suppressed, and in a case in which the volume average particle size is 250 nm or less, nozzle clogging is suppressed, satisfactory jettability is obtained, and also, images with high density are obtained, which is preferable.

The volume average particle size of pigment particles refers to the particle size of the pigment itself, or in a case in which additives such as a dispersant are adhering to the coloring material, the volume average particle size refers to the particle size of particles with attached additives. According to the invention, a NanoTrac UPA particle size analyzer (UPA-EX150; manufactured by Nikkiso Co., Ltd.) can be used as a measuring apparatus for the volume average particle size of pigment particles. The measurement can be carried out by introducing 3 ml of an aqueous pigment dispersion into a measurement cell and performing according to a predetermined measurement method. Regarding the parameters to be inputted at the time of making measurement, the ink viscosity is used for the viscosity, and the pigment density is used for the density of the dispersed particles.

### <Dispersant>

The aqueous pigment dispersion of the invention includes at least two kinds of dispersants, namely, a first dispersant and a second dispersant.

The dispersants according to the invention can be arbitrarily selected from low molecular dispersants and high molecular dispersants, and additionally from water-soluble dispersants and water-insoluble dispersants; however, from the viewpoint of the image quality of printed materials, it is preferable that the dispersants are high molecular dispersants. Furthermore, since dispersion is performed in a water-based system, it is preferable that the dispersants are water-soluble, from the viewpoints of dispersibility and dispersion stability. It is particularly preferable that the dispersants according to the invention are water-soluble high molecular dispersants.

According to the invention, preferred examples of the high molecular dispersants include polyurethane, polyester, and/or polyvinyl-based resins, and more preferred examples include polyurethane, polyester, and/or polyvinyl-based resins, while polyvinyl-based resins (vinyl polymers) are most preferred. In this invention, it is preferable to use two or more kinds of polymers in combination.

It is preferable that the high molecular dispersants are dispersants obtained by polymerizing both a hydrophilic monomer and a hydrophobic monomer.

A polyvinyl-based resin according to the invention is a homopolymer or copolymer of an ethylenically unsaturated monomer, and examples include an acrylic resin and a styrene resin.

A hydrophilic monomer is a monomer having certain hydrophilicity due to an ionic group or a nonionic group. The ionic group may be cationic or anionic.

A cationic group as well as an anionic group imparts amphoteric stabilization to a dispersant.

Preferred examples of the anionic group include a carboxyl group, a phenolic hydroxyl group, a sulfonic acid group, a sulfuric acid group, a phosphonic acid group, a polyphosphoric acid group, a phosphoric acid group, and salts thereof.

Preferred examples of the cationic group include a quaternary ammonium group, a benzalkonium group, a guanidinium group, a biguanidinium group, and a pyridinium group. These may also be in the form of salts such as hydroxide, sulfate, nitrate, chloride, bromide, iodide, and fluoride.

Preferred examples of the nonionic group include a glucoxide structure, a sugar structure, a pyrrolidone structure, an acrylamide group, a hydroxyl group, and a poly(alkylene oxide) group; more preferred examples include a poly(ethylene oxide) group or a poly(propylene oxide) group; and even more preferred examples include -(CH₂CH₂O)ₙH and -(CH₂CH₂O)ₙC₁₋₄- alkyl. Here, n represents 3 to 200 (preferably 4 to 20). Hereinafter, for example, the expression of C₁₋₄- means "having 1 to 4 carbon atoms".

The polymer may include only a nonionic group, may include a plurality of nonionic groups for the entirety of the polymer, or may include one or more polymer chains including a nonionic group. A hydroxyl group is inserted using, for example, polyvinyl alcohol, a (meth)acrylic compound having a hydroxyl group, and cellulose. An ethyleneoxy group is inserted using a polymer chain such as polyethylene oxide.

A hydrophobic monomer is a monomer containing a hydrophobic group. Representative examples of a compound having a hydrophobic group include hydrocarbons, fluorocarbons, poly-C₃₋₄-alkyleneoxy compounds, and alkylsiloxanes, all of which have 3 or fewer, and preferably none, of hydrophilic groups. The hydrophobic group is preferably a C₃₋₅₀ chain, and a hydrophobic monomer may have propylene oxide in a side chain or in a straight chain in the monomer.

The polymer may be a homopolymer; however, the polymer is preferably a copolymer. The polymer may be a random polymer (statistically short blocks or segments) or may be a graft polymer (long blocks or segments). The polymer may also be an alternating polymer. The polymer may be branched; however, preferably, the polymer is a straight chain. The polymer may have two or more segments (for example, block and graft copolymer); however, preferably, the polymer is a random polymer.

In an embodiment in which the polymer has two or more segments, it is preferable that at least one segment is hydrophobic, and at least one segment is hydrophilic with mutual relevance. Preferred methods for producing hydrophobic and hydrophilic segments are based on copolymerization of hydrophobic monomers and hydrophilic monomers, respectively. In a case in which the polymer has at least one hydrophobic segment and at least one hydrophilic segment, the carboxyl group may be in the hydrophobic segment, may be in the hydrophilic segment, or may be in both the segments.

A vinyl polymer (polyvinyl) may be produced by any appropriate means. A preferred method for producing a vinyl polymer is, in particular, free radical polymerization of using a (meth)acrylate and a vinyl monomer such as vinylnaphthalene or a styrene monomer. Appropriate examples of free radical polymerization include, but are not limited to, suspension polymerization, solution polymerization, dispersion polymerization, and emulsion polymerization; however, solution polymerization is preferred.

It is preferable that a (meth)acrylate monomer is used for the vinyl polymer.

The vinyl polymer is preferably a copolymer.

Preferably, a copolymer induced from a hydrophobic monomer and a hydrophilic monomer substantially does not have segments. For example, the copolymer is produced by free radical polymerization, in which the segment length is very short or no segment exists. Such a case is often referred to as "random" polymerization. A co-polyvinyl polymer having segments is produced by polymerization methods such as living polymerization, particularly atomic group transfer polymerization, atom transfer polymerization, macromonomer polymerization, graft polymerization, and anionic or cationic polymerization. Suitable hydrophilic vinyl monomers are nonionic and ionic monomers. Preferred examples of a nonionic monomer include saccharides, glucose, amides, and pyrrolidone, and particularly, monomers having hydroxyl groups and ethoxy groups are used. Preferred examples of the nonionic monomer include hydroxyethyl acrylate, hydroxyethyl methacrylate, vinylpyrrolidone, ethoxylated (meth)acrylates, and (meth)acrylamides. Suitable ionic vinyl monomers may be cationic.

A preferred anionic vinyl monomer contains at least one selected from the group consisting of a carboxyl group, a phosphoric acid group, and a sulfonic acid group (these acids may be in a free form or may be in a salt form). Preferred examples thereof include (meth)acrylic acid, styrenesulfonic acid, vinylbenzylsulfonic acid, vinylsulfonic acid, (meth)acryloyloxyalkylsulfonic acids (for example, acryloyloxymethylsulfonic acid, acryloyloxyethylsulfonic acid, acryloyloxypropylsulfonic acid, acryloyloxybutylsulfonic acid, methacryloyloxymethylsulfonic acid, methacryloyloxyethylsulfonic acid, methacryloyloxypropylsulfonic acid, and methacryloyloxybutylsulfonic acid), 2-acrylamido-2-alkylalkanesulfonic acids (for example, 2-acrylamido-2-methylethanesulfonic acid, 2-acrylamido-2-methylpropanesulfonic acid, and 2-acrylamido-2-methylbutanesulfonic acid), 2-methacrylamido-2-alkylalkanesulfonic acids (for example, 2-methacrylamido-2-methylethanesulfonic acid, 2-methacrylamido-2-methylpropanesulfonic acid, and 2-methacrylamido-2-methylbutanesulfonic acid), mono(acryloyloxyalkyl)phosphates (for example, mono(acryloyloxyethyl)phosphate and mono(3-acryloyloxypropyl)phosphate), and mono(methacryloyloxyalkyl)phosphates (for example, mono(methacryloyloxyethyl)phosphate and mono(3-methacryloyloxypropyl)phosphate).

A preferred cationic vinyl monomer contains a quaternary ammonium group, a pyridinium group, a guanidinium group, or a biguanidinium group.

A preferred hydrophobic vinyl monomer does not have a hydrophilic group. Preferred examples of the hydrophobic vinyl monomer include C₁₋₂₀-hydrocarbyl (meth)acrylates, butadiene, styrene, and vinylnaphthalene. C₁₋₂₀-hydrocarbyl (meth)acrylates (for example, methyl (meth)acrylate, butyl (meth)acrylate, octyl (meth)acrylate, 2-ethylhexyl (meth)acrylate, isobornyl acrylate, lauryl acrylate, stearyl acrylate, benzyl (meth)acrylate, and phenoxyethyl (meth)acrylate) are preferred, and methyl methacrylate, benzyl methacrylate, 2-ethylhexyl methacrylate, and phenoxyethyl methacrylate are particularly preferred. These hydrocarbyl groups may be branched groups; however, straight-chained groups are preferred.

A polyester having at least one carboxyl group is produced also by a reaction between a diol monomer and an excessive amount of a dicarboxylic acid monomer. A carboxyl group can also be introduced by copolymerization of a diol having a carboxyl group and a dicarboxylic acid monomer.

A polyester is typically produced by esterification between a dicarboxylic acid and a diol.

A polyester having a carboxylic acid can be produced by, for example, subjecting a carboxyl group-containing compound and a hydroxyl group-containing compound to a dehydration condensation reaction according to a known method such as a fusion method or a solvent method, such that carboxyl groups remain unreacted.

Examples of the polyester include products obtained by appropriately selecting a compound having a carboxyl group, such as a monobasic acid or a polybasic acid, and a compound having a hydroxyl group, such as a diol or a polyol, and subjecting the compounds to dehydration condensation. Furthermore, products obtained by using oils and fats or fatty acids become alkyd resins.

The carboxyl group carried by the polyester used in the invention is mainly an unreacted carboxyl group originating from a polybasic acid such as a dibasic acid or a higher-basic acid, which constitutes the polyester.

Examples of the polybasic acid include adipic acid, (anhydrous) succinic acid, sebacic acid, dimer acid, (anhydrous) maleic acid, (anhydrous) phthalic acid, isophthalic acid, terephthalic acid, (anhydrous) tetrahydrophthalic acid, (anhydrous) hexahydrophthalic acid, hexahydroterephthalic acid, 2,6-naphthalenedicarboxylic acid, (anhydrous) trimellitic acid, and (anhydrous) pyromellitic acid.

Examples of a compound having a carboxyl group, which can be used in addition to the polybasic acid, include lower alkyl esters of acids, such as dimethyl terephthalate; monobasic acids such as benzoic acid, p-tertiary butyl benzoic acid, rosin, and hydrogenated rosin; fatty acids, and oils and fats; macromonomers having one or two carboxyl groups at the molecular ends; and 5-sodium sulfoisophthalic acid and dimethyl ester thereof.

Examples of a compound having a hydroxyl group include diols such as ethylene glycol, neopentyl glycol, propylene glycol, diethylene glycol, dipropylene glycol, 2-methyl-1,3-propanediol, 2,2-diethyl-1,3-propanediol, 1,4-butanediol, 1,3-propanediol, 1,6-hexanediol, 1,4-cyclohexanedimethanol, 1,5-pentanediol, an alkylene oxide adduct of bisphenol A, hydrogenated bisphenol A, an alkylene oxide adduct of hydrogenated bisphenol A, polyethylene glycol, polypropylene glycol, and polytetramethylene glycol; polyols such as glycerin, trimethylolpropane, trimethylolethane, diglycerin, pentaerythritol, and trishydroxyethyl isocyanurate; monoglycidyl compounds such as "CARDURA E-10" (glycidyl ester of a synthetic fatty acid manufactured by Shell Chemicals LP); and macromonomers having two hydroxyl groups at one molecular end.

At the time of synthesizing a polyester, hydroxyl group-containing fatty acids or oils and fats, such as castor oil and 12-hydroxystearic acid; compounds having a carboxyl group and a hydroxyl group, such as dimethylolpropionic acid, p-hydroxybenzoic acid, and ε-caprolactone; and the like can also be used.

Furthermore, a portion of a dibasic acid may be replaced with a diisocyanate compound.

A polyester having a carboxyl group can also be produced by a method of subjecting a polyester having a hydroxyl group to an addition reaction with an acid anhydride such as maleic anhydride, phthalic anhydride, tetrahydrophthalic anhydride, hexahydrophthalic anhydride, or trimellitic anhydride.

A polyester having a hydroxyl group and a carboxyl group can be easily produced by, for example, performing a dehydration condensation reaction of a polyester resin by a known method, such that hydroxyl groups and carboxyl groups remain unreacted.

A polyester having a tertiary amino group and a carboxyl group can be easily produced by, for example, using a compound having a tertiary amino group and a hydroxyl group, such as triethanolamine, N-methyldiethanolamine, or N,N-dimethylethanolamine as an alcohol component at the time of producing a polyester resin.

A polyester having a radical polymerizable unsaturated group and a carboxyl group can be easily produced by, for example, [1] a method of subjecting a polyester having a hydroxyl group and a carboxyl group, to an addition reaction with a radical polymerizable unsaturated group-containing monomer having an isocyanate group, such as 2-methacryloyloxyethyl isocyanate, or an acid anhydride having a radical polymerizable unsaturated group, such as maleic anhydride; [2] a method of subjecting a polyester resin having a carboxyl group to an addition reaction with a polymerizable monomer having an epoxy group; [3] a method of synthesizing a polyester resin by using a radical polymerizable unsaturated group-containing monomer such as maleic anhydride as an acid component; or the like.

A polyurethane is preferably produced by a condensation reaction between a polyisocyanate component (for example, a diisocyanate) and a polyol component (for example, a diol).

A polyurethane having a carboxyl group can be easily produced by, for example, reacting a polyol component including a compound having a carboxyl group and a hydroxyl group, such as dimethylolpropionic acid, as a component for introducing a carboxyl group, with a polyisocyanate component.

Regarding the polyol component, trifunctional or higher-functional polyol compounds can also be used as necessary, in addition to the diol component mentioned in connection with the method for producing a polyester.

Examples of the polyisocyanate component that can be used include diisocyanate compounds such as 2,4-tolylene diisocyanate, 2,6-tolylene diisocyanate, 4,4'-diphenylmethane diisocyanate, hexamethylene diisocyanate, phenylene diisocyanate, 1,5-naphthalene diisocyanate, meta-xylylene diisocyanate, isophorone diisocyanate, hydrogenated tolylene diisocyanate, hydrogenated 4,4'-diphenylmethane diisocyanate, hydrogenated meta-xylylene diisocyanate, and crude 4,4'-diphenylmethane diisocyanate; as well as polyisocyanate compounds such as polymethylene polyphenyl isocyanate.

Production of a polyurethane may be carried out according to a conventional method. For example, it is preferable that an addition reaction is performed in an inert organic solvent solution that does not react with an isocyanate group, at room temperature or at a temperature of about 40°C to 100°C. At that time, a known catalyst such as dibutyltin dilaurate may also be used.

In the reaction system at the time of producing a polyurethane, a known chain extending agent such as a diamine; a polyamine; an N-alkyldialkanolamine such as N-methyldiethanolamine; or a dihydrazide compound can also be used.

A polyurethane having a hydroxyl group and a carboxyl group can be easily produced by, for example, performing the reaction at proportions by which the amount of hydroxyl groups becomes larger than the amount of isocyanate groups, at the time of producing the polyurethane. Alternatively, the polyurethane can also be easily produced by subjecting a polyisocyanate having a carboxyl group and a terminal isocyanate group, to an addition reaction with a compound having two or more hydroxyl groups in one molecule.

A polyurethane having a tertiary amino group and a carboxyl group can be easily produced by, for example, using an N-alkyldialkanolamine such as N-methyldiethanolamine as a portion of the polyol component.

A polyurethane having a blocked isocyanate group and a carboxyl group can be easily produced by, for example, subjecting a polyisocyanate having a carboxyl group and a terminal isocyanate group, to an addition reaction with a known blocking agent.

A polyurethane having an epoxy group and a carboxyl group can be easily produced by, for example, subjecting a polyisocyanate having a carboxyl group and a terminal isocyanate group, to an addition reaction with a compound having a hydroxyl group and an epoxy group.

Examples of the compound having a hydroxyl group and an epoxy group include glycidol, glycerin diglycidyl ether, trimethylolpropane diglycidyl ether, and diglycidyl ether of bisphenol A.

A polyurethane having a radical polymerizable unsaturated group and a carboxyl group as an acidic group can be easily produced by, for example, a method of subjecting a polyisocyanate having a terminal isocyanate group, to an addition reaction with a polymerizable monomer having a hydroxyl group such as described above and a compound having a hydroxyl group and a radical polymerizable unsaturated group, such as glycerol mono(meth)acrylate, trimethylolpropane di(meth)acrylate, or pentaerythritol triacrylate.

A polyurethane having a hydrolyzable alkoxysilane group and a carboxyl group as an acidic group can be easily produced by, for example, subjecting a polyisocyanate having a terminal isocyanate group, to an addition reaction with a silane coupling agent having activated hydrogen that can react with an isocyanate group, such as γ-mercaptopropyltrimethoxysilane, γ-mercaptopropylmethyldimethoxysilane, γ-aminopropyltrimethoxysilane, or γ-aminopropyltriethoxysilane.

The polymer is selected so as to suit the dispersing medium used, and to suit a liquid vehicle in the final composition to be used (for example, ink composition). For example, in a case in which the aqueous pigment dispersion is used in an aqueous ink composition for inkjet recording, it is preferable that the polymer is hydrophilic.

### [Molecular weight]

According to the invention, the weight average molecular weight of the high molecular dispersant is preferably from 5,000 to 200,000, more preferably from 8,000 to 150,000, and even more preferably from 10,000 to 100,000. In a case in which the high molecular dispersant has a weight average molecular weight of 5,000 or more, printed materials have excellent image quality which is preferable, and in a case in which the dispersant has a weight average molecular weight of 200,000 or less, viscosity increase can be suppressed, and deterioration of storage stability is prevented, which is preferable.

Regarding commercially available dispersants, any product may be used as long as the product can be used in a water-based system and is not noticeably colored; however, for example, SOLSEPERSE (registered trademark) series manufactured by Lubrizol Japan, Ltd., including SOLSPERSE 20000, SOLSPERSE 27000, SOLSPERSE 41000, SOLSPERSE 41090, SOLSPERSE 43000, SOLSPERSE 44000, and SOLSPERSE 54000; DISPERBYK (registered trademark) series manufactured by BYK Chemie GmbH, including DISPERBYK-180, DISPERBYK-181, DISPERBYK-182, DISPERBYK-183, DISPERBYK-184, DISPERBYK-185, DISPERBYK-187, DISPERBYK-190, DISPERBYK-191, DISPERBYK-192, DISPERBYK-193, DISPERBYK-194, DISPERBYK-2010, DISPERBYK-2012, DISPERBYK-2013, DISPERBYK-2015, DISPERBYK-2055, DISPERBYK-2060, DISPERBYK-2061, DISPERBYK-2090, DISPERBYK-2091, DISPERBYK-2095, and DISPERBYK-2096; EFKA (registered trademark) series manufactured by BASF SE, including EFKA 4500, EFKA 4510, EFKA 4520, EFKA 4550, EFKA 4560, EFKA 4570, EFKA 4580, EFKA 4585, EFKA 4800, EFKA 5071, EFKA 6220, EFKA 6225, and EFKA 6230; and Dispex (registered trademark) Ultra PX 4575 can be used.

### [Preferred embodiments of dispersant]

According to the invention, it is preferable that the first dispersant has an amine value of 5 mg KOH/g or more, while the amine value is larger than the acid value. Furthermore, it is preferable that the second dispersant is a long-chain fatty acid salt, or has an acid value of 5 mg KOH/g or more, while the acid value is larger than or equal to the amine value.

It is preferable that the first dispersant is a high molecular dispersant having an amine value of 5 mg KOH/g or more, with the amine value being larger than the acid value.

The amine value of the first dispersant is more preferably 7 to 150 mg KOH/g, and even more preferably 10 to 100 mg KOH/g.

It is also preferable that the amine value of the first dispersant is larger than the acid value, and the difference between the amine value and the acid value (amine value - acid value) is more preferably 3 to 100 mg KOH/g, even more preferably 5 to 70 mg KOH/g, and particularly preferably 10 to 50 mg KOH/g.

Regarding the first dispersant, a dispersant selected from the following group A is preferred.

Group A: EFKA 4510 (acid value: 17 mg KOH/g, amine value: 40 mg KOH/g), EFKA 4560 (acid value: 0 mg KOH/g, amine value: 22 mg KOH/g), EFKA 4580 (acid value: 0 mg KOH/g, amine value: 16 mg KOH/g), EFKA 4585 (acid value: 0 mg KOH/g, amine value: 20 mg KOH/g), EFKA 4800 (acid value: 0 mg KOH/g, amine value: 37 mg KOH/g), EFKA 5071 (acid value: 80 mg KOH/g, amine value: 95 mg KOH/g), EFKA 6220 (acid value: 20 mg KOH/g, amine value: 30 mg KOH/g), DISPERBYK-183 (acid value: 0 mg KOH/g, amine value: 17 mg KOH/g), and DISPERBYK-184 (acid value: 0 mg KOH/g, amine value: 14 mg KOH/g).

Among these, the first dispersant is more preferably EFKA 4560, EFKA 4580, EFKA 4585, EFKA 4800, EFKA 5071, DISPERBYK-183, or DISPERBYK-184; even more preferably EFKA 4560, EFKA 4585, EFKA 4800, DISPERBYK-183, or DISPERBYK-184; particularly preferably EFKA 4560, EFKA 4585, or DISPERBYK-184; and most preferably EFKA 4585.

It is preferable that the second dispersant is a long-chain fatty acid salt, or a high molecular dispersant having an acid value of 5 mg KOH/g or more, with the acid value being larger than or equal to the amine value.

Regarding the long-chain fatty acid salt, an alkali metal salt of a long-chain fatty acid having 14 to 36 carbon atoms is preferred, and specific examples include sodium oleate, potassium oleate, sodium stearate, potassium stearate, sodium palmitate, and potassium palmitate. Among these, sodium oleate and sodium stearate are preferably mentioned as examples.

It is also preferable that the second dispersant is a high molecular dispersant having an acid value of 5 mg KOH/g or more, with the acid value being larger than or equal to the amine value. In a case in which the second dispersant is a high molecular dispersant, the acid value is preferably 5 mg KOH/g or more, more preferably 6 to 200 mg KOH/g, even more preferably 10 to 150 mg KOH/g, and particularly preferably 15 to 100 mg KOH/g.

Furthermore, it is preferable that the acid value is larger than or equal to the amine value, and the difference between the acid value and the amine value (acid value - amine value) is preferably 0 to 200 mg KOH/g, more preferably 0 to 150 mg KOH/g, and even more preferably 0 to 100 mg KOH/g.

Regarding the second dispersant, a dispersant selected from the following group B is preferred.

Group B: DISPERBYK-181 (acid value: 30 mg KOH/g, amine value: 0 mg KOH/g), DISPERBYK-180 (acid value: 95 mg KOH/g, amine value: 95 mg KOH/g), DISPERBYK-187 (acid value: 35 mg KOH/g, amine value: 35 mg KOH/g), DISPERBYK-190 (acid value: 10 mg KOH/g, amine value: 0 mg KOH/g), DISPERBYK-194 (acid value: 70 mg KOH/g, amine value: 0 mg KOH/g), DISPERBYK-2090 (acid value: 60 mg KOH/g, amine value: 0 mg KOH/g), DISPERBYK-2091 (acid value: 15 mg KOH/g, amine value: 0 mg KOH/g), EFKA 4520 (acid value: 6 mg KOH/g, amine value: 6 mg KOH/g), EFKA 6225 (acid value: 50 mg KOH/g, amine value: 40 mg KOH/g), and long-chain fatty acid salts.

Among these, the second dispersant is more preferably DISPERBYK-181, DISPERBYK-180, DISPERBYK-187, DISPERBYK-190, DISPERBYK-2090, or EFKA 6225; even more preferably DISPERBYK-181, DISPERBYK-187, DISPERBYK-190, DISPERBYK-2090, or EFKA 6225; particularly preferably DISPERBYK-181, DISPERBYK-187, DISPERBYK-2090, or EFKA 6225; and most preferably DISPERBYK-181.

According to the invention, preferred examples of the combination of the first dispersant and the second dispersant (first dispersant, second dispersant) include (EFKA 4585, DISPERBYK-181), (EFKA 4585, DISPERBYK-180), (DISPERBYK-184, DISPERBYK-187), (EFKA 5071, DISPERBYK-2090), and (EFKA 4560, DISPERBYK-187). Among these, the combinations of (EFKA 4585, DISPERBYK-181), (DISPERBYK-184, DISPERBYK-187), and (EFKA 4560, DISPERBYK-187) are more preferred; the combinations of (EFKA 4585, DISPERBYK-181) and (DISPERBYK-184, DISPERBYK-187) are even more preferred; and the combination of (EFKA 4585, DISPERBYK-181) is most preferred.

Above all, a combination of a first dispersant having an amine value of 10 to 100 mg KOH/g and a value of (amine value - acid value) of 10 to 50 mg KOH/g, and a second dispersant having an acid value of 15 to 100 mg KOH/g and a value of (acid value - amine value) of 0 to 100 mg KOH/g, is particularly preferred.

Here, the term "acid value" represents an acid value per gram of the dispersant solid content, and the value can be determined by a potential difference titration method according to JIS K 0070. The term "amine value" represents an amine value per gram of the dispersant solid content, and the value refers to a value obtained by determining the amine value according to a potential difference titration method using a 0.1 N aqueous solution of hydrochloric acid and then converting the value into equivalents of potassium hydroxide.

The mass ratio of the contents of the first dispersant and the second dispersant (first dispersant:second dispersant) in the aqueous pigment dispersion of the invention is preferably 10:90 to 90:10, more preferably 20:80 to 80:20, and even more preferably 30:70 to 70:30.

In a case in which the mass ratio between the first dispersant and the second dispersant is in the range described above, excellent storage stability is obtained, and therefore, it is preferable.

According to the invention, use of the dispersant is not limited to a combined use of two kinds of dispersants, and the aqueous pigment dispersion may further include another dispersant such as a third dispersant, in addition to the first dispersant and the second dispersant. The total content of the first dispersant that satisfies the requirements of the amine value and the acid value as described above and the second dispersant that satisfies the requirements of the amine value and the acid value, or that is a long-chain fatty acid salt, is preferably 50% by mass or more, more preferably 70% by mass or more, and even more preferably 90% by mass or more, of the total amount of dispersants.

### [D/P value]

The total content of the dispersants is preferably in the range of 10 to 90 parts by mass, more preferably in the range of 10 to 80 parts by mass, even more preferably in the range of 20 to 75 parts by mass, and particularly preferably in the range of 30 to 70 parts by mass, with respect to 100 parts by mass of the particular pigment. The dispersants may be used singly, or a plurality of dispersants may be used in combination.

In a case in which the content of the dispersants is 10 parts by mass or more, the amount of dispersants is sufficient for the particular pigment, and excellent storage stability is obtained. Meanwhile, in a case in which the content is 80 parts by mass or less, increase of viscosity is suppressed, and excellent storage stability is obtained.

In a case in which the content of the particular pigment in the aqueous pigment dispersion is designated as P, the content of the dispersants is designated as D, and the ratio between the content D and the content P is designated as D/P value, the D/P value is preferably from 0.1 to 0.8, more preferably from 0.2 to 0.75, and even more preferably from 0.3 to 0.7.

### [Solubility]

The dispersants may be any of water-insoluble dispersants or water-soluble dispersants; however, the solubility in water is preferably 1 g/100 mL or higher, more preferably 3 g/100 mL or higher, and even more preferably 5 g/100 mL or higher.

In a case in which the solubility in water is 1 g/100 mL or higher, excellent solubility in water is obtained, excellent adsorbability to the particular pigment is obtained, and satisfactory dispersibility is obtained.

### <Water>

The aqueous pigment dispersion of the invention contains water as a dispersing medium.

Regarding the dispersing medium, for example, pure water or ultrapure water such as ion-exchanged water, ultrafiltered water, reverse osmosis water, or distilled water is preferred. Furthermore, for the purpose of preventing the generation of mold, bacteria or the like, it is also preferable to use water that has been sterilized by an ultraviolet treatment, an aqueous hydrogen peroxide treatment, or the like.

According to the invention, the aqueous pigment dispersion may contain an organic solvent, in addition to water as described above. It is preferable that the amount of the organic solvent that is incorporated is smaller than the content of water, and the content of the organic solvent is preferably less than 100 parts by mass, more preferably 50 parts by mass or less, even more preferably 30 parts by mass or less, and particularly preferably 10 parts by mass or less, with respect to 100 parts by mass of water that is incorporated into the aqueous pigment dispersion.

The organic solvent to be used in combination is preferably a water-soluble organic solvent, and examples include alkyl alcohols having 1 to 4 carbon atoms, such as ethanol, methanol, butanol, propanol, and isopropanol; glycol ethers such as ethylene glycol monomethyl ether, ethylene glycol monoethyl ether, ethylene glycol monobutyl ether, ethylene glycol monomethyl ether acetate, diethylene glycol monomethyl ether, diethylene glycol monoethyl ether, diethylene glycol mono-n-propyl ether, ethylene glycol mono-isopropyl ether, diethylene glycol mono-isopropyl ether, ethylene glycol mono-n-butyl ether, ethylene glycol mono-t-butyl ether diethylene glycol mono-t-butyl ether, 1-methyl-1-methoxybutanol, propylene glycol monomethyl ether, propylene glycol monoethyl ether, propylene glycol mono-n-propyl ether, and dipropylene glycol mono-isopropyl ether; 2-pyrrolidone, formamide, acetamide, dimethyl sulfoxide, sorbitol, sorbitan, acetin, diacetin, triacetin, and sulfolane. These may be used singly, or two or more kinds thereof may be used in combination.

The aqueous pigment dispersion of the invention may contain other components in addition to the particular pigment, dispersants, and water described above. Examples of the other components include a preservative and a polyvalent ion.

### <Preservative>

A preservative will be explained. According to the invention, a preservative refers to a compound having a function of preventing the generation and growth of microorganisms, particularly bacteria and fungi (mold).

Regarding the preservative that can be used in the invention, various agents can be used. Regarding the preservative, inorganic preservatives containing heavy metal ions (silver ion-containing substances or the like) or salts may be preferentially mentioned. Examples of organic preservatives that can be used include various agents, including quaternary ammonium salts (tetrabutylammonium chloride, cetylpyridinium chloride, benzyltrimethylammonium chloride, and the like), phenol derivatives (phenol, cresol, butylphenol, xylenol, bisphenol, and the like), phenoxy ether derivatives (phenoxyethanol, and the like), heterocyclic compounds (benzotriazole, PROXEL, 1,2-benzisothiazolin-3-one, and the like), acid amides, carbamic acid, carbamates, amidine/guanidines, pyridines (sodium pyridinethione-1-oxide, and the like), diazines, triazines, pyrrole/imidazoles, oxazole/oxazines, thiazole/thiadiazines, thioureas, thiosemicarbazides, dithiocarbamates, sulfides, sulfoxides, sulfones, sulfamides, antibiotics (penicillin, tetracycline, and the like), sodium dehydroacetate, sodium benzoate, p-hydroxybenzoic acid ethyl ester, and salts thereof. Regarding the preservative, the compounds described in "Bokin Bobi Handobukku (Handbook of antibacterial and antifungal agents)" (Gihodo Shuppan Co., Ltd., 1986), "Bokin Bobi-zai Jiten (Encyclopedia of antibacterial and antifungal agents)" (edited by the Encyclopedia editorial committee of the Society for Antibacterial and Antifungal Agents, Japan), and the like can also be used.

Regarding these compounds, various compounds such as compounds having an oil-soluble structure and compounds having a water-soluble structure can be used; however, preferred ones are water-soluble compounds.

Regarding the preservative, a phenol derivative or a heterocyclic compound is preferred, and a heterocyclic compound is more preferred.

The heterocyclic compound is preferably a thiazole-based compound or a benzotriazole-based compound. Among preservatives, thiazole-based compounds function as antifungal agents in particular. Examples of the thiazole-based compound include benzisothiazoline, isothiazoline, 1,2-benzisothiazolin-3-one, 5-chloro-2-methyl-4-isothiazolin-3-one, 2-(thiocyanomethylthio)benzothiazole, 2-mercaptobenzothiazole, and 3-allyloxy-1,2-benzisothiazole-1,1-oxide. Furthermore, as thiazole-based antifungal agents, PROXEL (registered trademark) series (BDN, BD20, GXL, LV, XL2, Ultra 10, and the like) that are manufactured and sold by Arch Chemicals, Inc. can also be used.

Among preservatives, benzotriazole-based compounds function as rust inhibitors in particular, and for example, the generation of rust caused by, as one of the causes, the contact between the metal material that constitutes an inkjet head (particularly 42 alloy (nickel-iron alloy containing 42% nickel)) and an ink, can be prevented. Examples of the benzotriazole-based compounds include 1H-benzotriazole, 4-methyl-1H-benzotriazole, 5-methyl-1H-benzotriazole, and sodium salts or potassium salts thereof.

The preservatives can be added singly or in combination of two or more kinds thereof, to an aqueous solution.

It is preferable that the preservative is at least one selected from the group consisting of a heterocyclic compound, a phenol derivative, a phenoxy ether derivative, and an alkanediol; and it is more preferable that at least one of the preservatives is a heterocyclic compound.

It is even more preferable that the preservative is a heterocyclic compound, and the heterocyclic compound is a thiazole-based compound or a benzotriazole-based compound.

Regarding the amount of addition of the preservative to an aqueous solution, any amount can be used in a wide range; however, preferably, the amount of addition is 0.01% to 20% by mass, more preferably 0.1 to 10% by mass, and even more preferably 0.5% to 5% by mass, with respect to the particular pigment. By adjusting the content of the preservative to be within the range described above, an effect of suppressing proliferation of bacteria in the aqueous solution is obtained.

### <Polyvalent ion>

According to the invention, the aqueous pigment dispersion may contain polyvalent metal ions.

Examples of the polyvalent metal ions as used in the invention include Fe³⁺, Fe²⁺, Mg²⁺, Ca²⁺, Sr²⁺, Ba²⁺, Cd²⁺, Ni²⁺, Zn²⁺, Cu²⁺, Co²⁺, Pb²⁺, Mn²⁺, Al³⁺, Cr³⁺, and Sn⁴⁺.

It is preferable that the contents of the polyvalent metal ions in the aqueous pigment dispersion are respectively 10 ppm or less. More preferably, the contents are respectively 0.001 to 5 ppm. By adjusting the contents of the polyvalent metal ions in the aqueous pigment dispersion to the amounts defined as described above, the pigment and/or dispersants in the aqueous pigment dispersion of the invention can suppress increase in coarse particles caused by aggregation.

Hereinafter, the method for producing an aqueous pigment dispersion of the invention will be explained.

The method for producing an aqueous pigment dispersion of the invention includes Step b: a step of dispersing a particular pigment, a first dispersant, and a second dispersant in water and obtaining an aqueous pigment dispersion. Furthermore, it is preferable that the method includes Step a: a step of mixing the particular pigment, the first dispersant, the second dispersant, and water, before Step b. It is also preferable that the method further includes Step c: a step of adjusting the electrical conductivity of the aqueous pigment dispersion to 100 µS/cm or less, after Step b.

The aqueous pigment dispersion of the invention is an aqueous pigment dispersion produced via the Step b described above, and it is preferable that the aqueous pigment dispersion is an aqueous pigment dispersion produced via Step a before the Step b, while it is preferable that the aqueous pigment dispersion is an aqueous pigment dispersion produced via the Step c, after Step b.

In the following description, the respective steps will be explained.

### <Step a: mixing step of mixing azo pigment represented by Formula (1) and/or tautomer thereof, first dispersant, second dispersant, and water, and obtaining mixed liquid>

It is preferable that the method for producing an aqueous pigment dispersion of the invention includes Step a: a mixing step of mixing an azo pigment represented by Formula (1) and/or a tautomer thereof, a first dispersant, a second dispersant, and water, and obtaining a mixed liquid (hereinafter, also simply referred to as mixing step). It is because, as a result of mixing with a liquid medium in advance and wetting aggregates of the pigment, pigment aggregates can be uniformly dispersed without undispersed coarse particles remaining behind.

According to the invention, an aqueous pigment dispersion may also be obtained without going through a step of mixing the particular pigment, the first dispersant, the second dispersant, and water, for example obtaining a mixed liquid by mixing the particular pigment, the first dispersant, and water to produce a mixed liquid, subsequently introducing the mixed liquid and the second dispersant into a dispersing machine, and dispersing the content.

The mixing apparatus that is used in the mixing step described above may be selected as appropriate from known stirring machines and the like, and there are no particular limitations. It is also acceptable to perform stirring using a stirrer or the like.

The mixing time in the mixing step is not particularly limited; however, the mixing time is preferably 30 seconds to 2 hours, more preferably 1 minute to 1 hour and 30 minutes, and even more preferably 5 minutes to 1 hour.

The mixing temperature is not particularly limited; however, the mixing temperature is preferably 15°C to 60°C, more preferably 20°C to 50°C, and even more preferably 20°C to 40°C.

### <Step b: step of dispersing azo pigment represented by Formula (1) and/or tautomer thereof, first dispersant, and second dispersant in water, and obtaining aqueous pigment dispersion>

The method for producing an aqueous pigment dispersion of the invention includes Step b: a step of dispersing the azo pigment represented by Formula (1) and/or a tautomer thereof (particular pigment), the first dispersant, and the second dispersant in water, and obtaining an aqueous pigment dispersion (hereinafter, simply referred to as dispersing step).

The dispersing step can be carried out by utilizing a known method, a known dispersing apparatus, or the like, and there are no particular limitations. In the dispersing step, for example, a milling method (for example, a colloid mill, a ball mill, a sand mill, a bead mill, an attriter, a roll mill, a jet mill, a paint shaker, or an agitator mill), an ultrasonic method (an ultrasonic homogenizer), a high-pressure emulsion dispersing method (a high pressure homogenizer; specific commercially available apparatuses include a Gaulin homogenizer, a microfluidizer, a DeBEE2000, and the like), or a high-speed stirring type dispersing machine can be used.

Among these, a milling method is preferred, and a medium dispersing method (a colloid mill, a ball mill, a sand mill, a bead mill, or the like) is more preferred.

As described above, it is preferable that the particular pigment, the first dispersant, the second dispersant, and water are mixed in advance before the dispersing step to prepare a mixed liquid, this mixed liquid is dispersed using a dispersing machine, and thereby an aqueous pigment dispersion is obtained.

The method for producing an aqueous pigment dispersion of the invention is not limited to this, and the particular pigment, the first dispersant, the second dispersant, and water may be directly introduced into a dispersing machine. It is also acceptable that the particular pigment, the first dispersant, and water are mixed to produce a first mixed liquid, the second dispersant and water are mixed to produce a second mixed liquid, the first mixed liquid and the second mixed liquid are introduced into a dispersing machine, and then a dispersing treatment is carried out. According to the invention, at the time of performing the dispersing treatment, there are no particular limitations on the order of introduction into the dispersing machine, or on the presence or absence of mixing, as long as the particular pigment, the first dispersant, the second dispersant, and water are present.

The temperature employed in the dispersing step is not particularly limited; however, the temperature is preferably 15°C to 70°C, more preferably 20°C to 60°C, and even more preferably 25°C to 50°C. It is because, by setting the temperature of the dispersing step to be within the range described above, the dispersing time is shortened, and attachment of the pigment to the wall surface caused by evaporation of the liquid medium during dispersion can be prevented. The details of the reason why the dispersing time is shortened are not clearly known; however, it is speculated to be because, as the temperature increases, the pigment particles become easily acclimated to the liquid medium and are easily dispersed.

In the dispersing step, it is preferable that the particular pigment is dispersed such that the volume average particle size of the particular pigment falls in a desired range.

### < Step c: step of adjusting electrical conductivity of aqueous pigment dispersion to 100 µS/cm or less>

It is preferable that the method for producing an aqueous pigment dispersion of the invention further includes Step c: a step of adjusting the electrical conductivity of the aqueous pigment dispersion to 100 µS/cm or less (hereinafter, also simply referred to as Step c), after the Step b.

The electrical conductivity of the aqueous pigment dispersion can be adjusted to 100 µS/cm or less, from the viewpoint of imparting storage stability and ink jettability to an ink. The electrical conductivity of the aqueous pigment dispersion is preferably 1 to 100 µS/cm, more preferably 1 to 50 µS/cm, and most preferably 1 to 20 µS/cm. As the method includes Step c, an effect of storage stability of ink is obtained.

For the adjustment of the value of electrical conductivity, an AMBERLITE treatment (ion exchange resin treatment), an ultrafiltration treatment (UF treatment), and the like can be used. The details of the UF treatment are also described in paragraphs [0247] to [0249] of JP2011-144298A, and reference can be made thereto in connection with this invention.

According to the invention, the method may also include other steps in addition to Step a to Step c described above.

The time points of performing the various steps may be at any time, as long as the steps occur after Step b.

### <Heating treatment>

The method for producing an aqueous pigment dispersion of the invention may include a step of heat-treating the aqueous pigment dispersion (also simply referred to as heating treatment step). By including a heating treatment step, microorganisms such as fungi in the aqueous pigment dispersion can be reduced, and an aqueous pigment dispersion having excellent storage stability is obtained.

The heating temperature for the heating treatment step is preferably from 40°C to 100°C, more preferably from 50°C to 85°C, and even more preferably from 60°C to 80°C.

The heating time is preferably 5 minutes or longer, more preferably from 5 minutes to 24 hours, and even more preferably from 30 minutes to 12 hours.

### <pH adjustment step>

The method for producing an aqueous pigment dispersion of the invention may include a pH adjustment step of adjusting pH of the aqueous pigment dispersion. By adjusting the pH to a particular value, an aqueous pigment dispersion having excellent storage stability is obtained.

The pH adjustment step may be carried out at any desired time point; however, it is preferable that the pH adjustment step is carried out after Step c.

Regarding a pH adjusting agent, any compound that can adjust the pH to a desired value without adversely affecting the recording ink to be produced can be selected as appropriate according to the purpose, without any particular limitations; however, examples include alcohol amines (for example, diethanolamine, triethanolamine, triisopropanolamine, and 2-amino-2-ethyl-1,3-propanediol), alkali metal hydroxides (for example, lithium hydroxide, sodium hydroxide, and potassium hydroxide), ammonium hydroxides (for example, ammonium hydroxide and a quaternary ammonium hydroxide), phosphonium hydroxide, and alkali metal carbonates.

From the viewpoint of storage stability, the pH of the aqueous pigment dispersion is preferably adjusted to a value of 6 to 11, and particularly preferably to a value of 7 to 10.

### <Sterilization step>

Sterilization as used in the invention means an operation with germicidal action, and examples include irradiation with light such as UV, and addition of an additive having a germicidal effect, such as an alcohol. Among them, light irradiation is preferred.

As the method includes a sterilization step, generation of waste products from bacteria and the like is prevented, and an aqueous pigment dispersion having more excellent storage stability is obtained.

Regarding the means for light irradiation, a means capable of emitting near-ultraviolet light to ultraviolet light at 400 nm or less is preferred, and specifically, it is preferable to use a xenon lamp, a high-pressure mercury lamp, a black light, or a sterilizing lamp.

The time for light irradiation is not particularly limited; however, the time is preferably 1 minute to 2 hours, more preferably 3 minutes to 1 hour and 30 minutes, and even more preferably 5 minutes to 1 hour.

### <Deionization step>

The method for producing an aqueous pigment dispersion of the invention may include a deionization step of eliminating at least a portion of ion components. By eliminating ion components that are included as impurities in the particular pigment or dispersants, an aqueous pigment dispersion having excellent storage stability is obtained.

The deionization step may be carried out at any desired time point; however, it is preferable that the deionization step is carried out after Step c.

Examples of a method of eliminating ion components include methods based on membrane separation such as ultrafiltration or nanofiltration, and methods by adding an ion exchange resin and treating the aqueous pigment dispersion.

### <Centrifugation step>

The method for producing an aqueous pigment dispersion of the invention may include a centrifugation step. Coarse particles can be eliminated by a centrifugal operation.

Performing the centrifugation step is not particularly limited as long as the step is carried out after the pigment is dispersed (after Step b); however, it is preferable that the step is carried out before a filtration step that will be described below. As the centrifugation step is carried out before a filtration step, coarse particles causing clogging and thereby filterability being deteriorated can be suppressed.

The centrifugal force used at the time of performing centrifugation is preferably 500G to 50,000G, more preferably 700G to 20,000G, and even more preferably 1,000G to 15,000G. In a case in which the centrifugal force is 500G or greater, it is preferable because coarse particles settle down, and in a case in which the centrifugal force is 50,000G or less, it is preferable because settling of pigment particles that are in a dispersed state is suppressed.

### <Filtration step>

The method for producing an aqueous pigment dispersion of the invention may include a filtration step.

Coarse particles can be removed by filtration. Performing a filtration step is not particularly limited as long as the step is carried out after the pigment is dispersed (after Step b); however, it is preferable that the filtration step is carried out after a preservative is added, or as a final step of completing the pigment dispersion.

Particularly, in a case in which the method includes Step c, it is because a portion of the pigment dispersion is dried or aged, and thereby coarse particles may settle down.

The filter that can be used is not particularly limited as long as filtration can be performed therewith; however, preferred examples include cloth, a filter paper, and a membrane. The pore diameter is preferably 0.1 mm or less, more preferably 10 µm or less, even more preferably 5 µm or less, and particularly preferably 1 µm or less.

### (Coloring composition)

The coloring composition of the invention includes the aqueous pigment dispersion of the invention described above.

The coloring composition of the invention may include other additives as necessary, to the extent that the effects of the invention are not impaired. Examples of the other additives include known additives (described in JP2003-306623A) such as a drying preventing agent (wetting agent), a discoloration preventing agent, an emulsion stabilizer, a penetration enhancer, an ultraviolet absorber, an antifungal agent, a pH adjusting agent, a surface tension adjusting agent, an antifoaming agent, a viscosity adjusting agent, a dispersant, a dispersion stabilizer, a rust inhibitor, and a chelating agent. These various additives are added directly to the ink liquid in the case of a water-soluble ink.

Examples of the coloring composition that uses an aqueous pigment dispersion obtainable by the invention include aqueous coating materials for automobiles, coated steel panels, construction materials, and canisters; textile printing agents for dyeing fabrics; aqueous inks such as gravure inks and flexographic inks; inks for writing instruments such as aqueous ballpoint pens, fountain pens, aqueous felt-tipped pens, and aqueous markers; aqueous recording liquids for on-demand type inkjet printers such as a BUBBLEJET (registered trademark) method, a thermal jet method, and a piezoelectric method; and dispersions for color filters that are used in liquid crystal TV sets, laptop type computers, and the like. However, the use of the coloring composition is not limited to these applications.

The coloring composition is produced by appropriately selecting a coating film-forming resin, a curing agent for the resin, various auxiliary agents, an organic solvent, water, a basic substance, various pigments, and the like according to the use, and mixing an aqueous pigment dispersion obtainable by the invention with the selected materials.

The content proportion of the aqueous pigment dispersion obtainable by the invention in the coloring composition is, in terms of the pigment, preferably 50% by mass or less, and particularly preferably in the range of 0.1% to 40% by mass. In a case in which the proportion of the pigment is more than 50% by mass, there is a tendency that viscosity in the coloring composition increases, and the material to be coated cannot be colored.

Examples of the coating film-forming resin include natural proteins such as animal glue, gelatin, casein, albumin, gum Arabic, and fish glue; synthetic polymers such as alginic acid, methyl cellulose, carboxymethyl cellulose, polyethylene oxide, hydroxyethyl cellulose, polyvinyl alcohol, polyacrylamide, an aromatic amide, polyacrylic acid, polyvinyl ether, polyvinypyrrolidone, an acrylic resin, a polyester, an alkyd resin, a urethane resin, an amide resin, a melamine resin, an ether resin, a fluororesin, a styrene-acrylic resin, and a styrene-maleic acid resin; and general resins such as photosensitive resins, thermosetting resins, ultraviolet-curable resins, electron beam-curable resins. However, the examples are not particularly limited to these. These are selected and used according to the use application of the coloring composition.

The proportion of these coating film-forming resins in the coloring composition is preferably in the range of 0% to 50% by mass. Depending on the use applications, a resin component such as a high molecular dispersant used in the aqueous pigment dispersion may act as a resin for forming a coating film, or there may be applications in which a coating film-forming resin is not needed, for example, applications such as recording liquids. Therefore, a coating film-forming resin may not be essentially necessary in the coloring composition.

Examples of the curing agent for the coating film-forming resin include amino resins such as a melamine resin, a benzoguanamine resin, and a urea resin; phenolic resins such as trimethylolphenol, and condensates thereof; polyisocyanates such as tetramethylene diisocyanate (TDI), diphenylmethane diisocyanate (MDI), hexamethylene diisocyanate (HDI), naphthalene diisocyanate (NDI), isophorone diisocyanate (IPDI), xylylene diisocyanate (XDI), and modified isocyanates or blocked isocyanates thereof; amines such as an aliphatic amine, an aromatic amine, N-methylpiperazine, triethanolamine, morpholine, a dialkylminoethanol, and benzyldimethylamine; acid anhydrides such as polycarboxylic acid, phthalic anhydride, maleic anhydride, hexahydrophthalic anhydride, pyromellitic anhydride, benzophenonetetracarboxylic acid anhydride, and ethylene glycol bistrimellitate; epoxy compounds such as a bisphenol A type epoxy resin, a phenolic epoxy resin, a glycidyl methacrylate copolymer, a glycidyl ester resin of carboxylic acid, and an alicyclic epoxy; alcohols such as polyether polyol, polybutadiene glycol, polycaprolactone polyol, and trishydroxyethyl isocyanate (THEIC); and vinyl compounds such as a polyvinyl compound, a polyallyl compound, and a reaction product between a glycol or a polyol and acrylic acid or methacrylic acid, as unsaturated group-containing compounds that are used for radical curing by means of peroxide, UV curing, or electron beam curing.

The curing agent is selected as appropriate and used according to the use applications or suitability; however, there are occasions in which the curing agent is not used. The use proportion of the curing agent is preferably in the range of 0% to 50% by mass, and particularly preferably in the range of 0% to 40% by mass, with respect to 100% by mass of the coating film-forming resin.

Examples of the organic solvent include alcohols such as methyl alcohol, ethyl alcohol, n-butyl alcohol, isobutyl alcohol, tert-butyl alcohol, n-propyl alcohol, and isopropyl alcohol; amides such as dimethylformamide and dimethylacetamide; ketones such as acetone and methyl ethyl ketone; ethers such as tetrahydrofuran, dioxane, ethylene glycol methyl ether, ethylene glycol ethyl ether, diethylene glycol methyl ether, diethylene glycol ethyl ether, triethylene glycol monomethyl ether, and triethylene glycol monoethyl ether; polyhydric alcohols such as ethylene glycol, propylene glycol, butylenes glycol, triethylene glycol, 1,2,6-hexanetriol, thiodiglycol, diethylene glycol, polyethylene glycol, polypropylene glycol, and glycerin; N-methylpyrrolidone, and 1,3-dimethyl-2-imidazolidinone. Among these water-soluble organic solvents, polyhydric alcohols and ethers are preferred.

The content proportion of the organic solvent in an aqueous coloring liquid is preferably 50% by mass or less, and particularly preferably in the range of 0% to 30% by mass. Particularly, as long as the performance of the aqueous coloring liquid is not deteriorated, it is needless to say that it is preferable that the aqueous coloring liquid does not include an organic solvent at all, in view of environmental problems.

Examples of the auxiliary agents that are used as necessary include various auxiliary materials or stabilizers such as a dispersion wetting agent, an antiskinning agent, an ultraviolet absorber, an oxidation inhibitor, a preservative, an antimold agent, a pH adjusting agent, a viscosity adjusting agent, a chelating agent, and a surfactant; however, the auxiliary agents are not limited to these. Examples of the basic substance include inorganic compounds such as sodium hydroxide and potassium hydroxide; and organic amine compounds such as ethanolamine, diethanolamine, triethanolamine, N-methylethanolamine, N-ethyldiethanolamine, 2-amino-2-methylpropanol, 2-ethyl-2-amino-1,3-propanediol, 2-(aminoethyl)ethanolamine, tris(hydroxymethyl)aminomethane, ammonia, piperidine, and morpholine; however, the basic substances are not limited to these.

The dispersing machine that disperses the aqueous pigment dispersion of the invention in these coloring compositions may be sufficient with known simple dispersing machines such as DISPER; however, the dispersing machine is not limited to these.

Regarding the method for producing a coloring composition, a coloring composition can be produced only by adding a coating film-forming resin, a curing agent, various auxiliary agents, an organic solvent, water, various pigment compositions, and the like to the aqueous pigment dispersion described above, and mixing the mixture with stirring. However, in a case in which a high-viscosity resin or an organic solvent is added, a method of stirring the aqueous pigment dispersion and sequentially adding the above-mentioned resins, curing agent, organic solvent, and various auxiliary agents to the aqueous pigment dispersion, is more preferred.

A coloring composition including an aqueous pigment dispersion that is obtainable by the invention can be produced in accordance with the use application. Furthermore, performances that are required from a coloring composition, such as storage stability, solvent stability, and hydrophilicity for preventing clogging of the nozzle at the pen tip of writing instruments; and performances of a coating film having excellent general-purpose suitability, such as water resistance, weather fastness, transparency, and clearness, can be provided.

### (Ink composition)

The ink composition of the invention includes the aqueous pigment dispersion of the invention. The ink composition is not particularly limited, and the coloring composition mentioned above may be used as appropriate for ink applications. Specifically, the ink composition can be used as aqueous inks such as gravure inks and flexographic inks; inks for writing instruments such as aqueous ballpoint pens, fountain pens, aqueous felt-tipped pens, and aqueous markers; and inks for on-demand type inkjet printers such as a BUBBLEJET (registered trademark) method, a thermal jet method, and a piezoelectric method.

Among these, the ink composition of the invention is suitable as an ink composition for inkjet recording.

In regard to the ink composition for inkjet recording to which the aqueous pigment dispersion of the invention is applied, the average particle size (Mv) of the pigment is preferably in the range of 20 to 250 nm, and more preferably in the range of 20 to 100 nm. In a case in which the average particle size of the pigment is 20 nm or more, since dispersion stability is enhanced, satisfactory storage stability or jetting stability can be obtained, and high OD values of recorded materials can also be secured. Furthermore, in a case in which the average particle size of the pigment is 250 nm or less, nozzle clogging can be prevented, and settling of resins with adsorbed pigment can also be suppressed.

The ink composition for inkjet recording is produced using the aqueous pigment dispersion of the invention, and it is preferable that the content of the pigment with respect to the total amount of the ink composition is in the range of 2% to 15% by mass. In a case in which the pigment content is 2% by mass or more, high OD values of recorded materials can be secured. Furthermore, in a case in which the pigment content is 15% by mass or less, physical property values appropriate for inkjetting can be easily met, and satisfactory storage stability and jetting stability can also be secured.

In the ink composition for inkjet recording, an organic solvent may also be used in combination, in addition to water, as the solvent. Regarding such an organic solvent, an organic solvent which has compatibility with water, ameliorates the penetrability of the ink composition into a recording medium and the nozzle clogging properties, and improves the solubility of components in the ink composition, such as a penetrating agent that will be described below, is preferably used. Examples include alkyl alcohols having 1 to 4 carbon atoms, such as ethanol, methanol, butanol, propanol, and isopropanol; glycol ethers such as ethylene glycol monomethyl ether, ethylene glycol monoethyl ether, ethylene glycol monobutyl ether, ethylene glycol monomethyl ether acetate, diethylene glycol monomethyl ether, diethylene glycol monoethyl ether, diethylene glycol mono-n-propyl ether, ethylene glycol mono-isopropyl ether, diethylene glycol mono-isopropyl ether, ethylene glycol mono-n-butyl ether, ethylene glycol mono-t-butyl ether, diethylene glycol mono-t-butyl ether, 1-methyl-1-methoxybutanol, propylene glycol monomethyl ether, propylene glycol monoethyl ether, propylene glycol mono-n-propyl ether, and dipropylene glycol mono-isopropyl ether; 2-pyrrolidone, formamide, acetamide, dimethyl sulfoxide, sorbite, sorbitan, acetin, diacetin, triacetin, and sulfolane. It is preferable that one kind or two or more kinds of these are incorporated into the ink composition of the invention at a proportion of 0% to 10% by mass.

It is preferable that a surfactant is incorporated into the ink composition for inkjet recording, from the viewpoint of enhancing the print quality. The surfactant can be selected from anionic surfactants, cationic surfactants, amphoteric surfactants, and nonionic surfactants, which are generally used; however, among these nonionic surfactants are particularly preferred. Specific examples of the nonionic surfactants include an acetylene glycol-based surfactant, an acetylene alcohol-based surfactant, a polyoxyethylene alkyl ether, and a polyoxyethylene phenyl ether, and by using these, an ink composition having less foaming compared to ionic surfactants can be obtained. Even among the nonionic surfactants, an acetylene glycol-based surfactant gives an ink composition that is almost free of foaming, and thus it is particularly preferable in a case in which an acetylene glycol-based surfactant is used for inkjet recording. Examples of such an acetylene glycol-based surfactant include 2,4,7,9-tetramethyl-5-decyne-4,7-diol, 3,6-dimethyl-4-octyne-3,6-diol, 3,5-dimethyl-1-hexyn-3-ol, and materials obtained by adding 1 to 30 units on the average of an ethyleneoxy group or a propyleneoxy group to each of a plurality of hydroxyl groups in each of the above-mentioned materials. Regarding the acetylene glycol-based surfactant, commercially available products can also be used, and examples thereof include "OLFINE E1010" and "OLFINE STG" (all manufactured by Nissin Chemical Industry Co., Ltd.). One kind or two or more kinds of these can be used. The content of the acetylene glycol-based surfactant is preferably 0.1% to 3% by mass, and more preferably 0.5% to 1.5% by mass, in the ink composition of the invention.

It is preferable that a penetrating agent is incorporated into the ink composition for inkjet recording, in order to further improve fixability to a recording medium and to enhance scratch resistance of images to be recorded. Regarding such a penetrating agent, glycol ethers such as diethylene glycol mono-n-butyl ether, diethylene glycol mono-t-butyl ether, triethylene glycol mono-n-butyl ether, propylene glycol mono-n-butyl ether, and dipropylene glycol mono-n-butyl ether are preferred, and particularly, diethylene glycol mono-n-butyl ether, triethylene glycol mono-n-butyl ether, and dipropylene glycol mono-n-butyl ether are preferred from the viewpoint of having excellent penetration performance and easy handleability. The content of the penetrating agent is preferably 1% to 20% by mass, and more preferably 2% to 10% by mass, in the ink composition of the invention, from the viewpoint that penetrability and fast dryability of the ink composition are enhanced, and the occurrence of bleeding of ink can be effectively prevented.

It is preferable that a water-soluble glycol is incorporated into the ink composition for inkjet recording, in order to prevent nozzle clogging and to further enhance reliability. Examples of such a water-soluble glycol include dihydric alcohols such as ethylene glycol, diethylene glycol, triethylene glycol, tetraethylene glycol, propylene glycol, dipropylene glycol, tripropylene glycol, a polyethylene glycol having a molecular weight of 2,000 or less, 1,3-propylene glycol, isobutylene glycol, 1,4-butanediol, 1,3-butanediol, 1,5-pentanediol, 1,2-heaxanediol, and 1,6-hexanediol; and trihydric or higher-hydric alcohols such as glycerin, meso-erythritol, and pentaerythritol. One kind or two or more kinds of these can be used. The content of the water-soluble glycol is preferably 1% to 30% by mass in the ink composition of the invention.

Furthermore, an antifungal agent or a preservative may also be incorporated into the ink composition for inkjet recording, in order to prevent clogging of nozzles as in the case of the water-soluble glycol. Examples include sodium benzoate, sodium pentachlorophenol, sodium 2-pyridinethiol-1-oxide, sodium sorbate, sodium dehydroacetate, 1,2-dibenzisothiazolin-3-one (PROXEL CRL, PROXEL BDN, PROXEL GXL, PROXEL XL-2, and PROXEL TN of Avecia Biotechnology, Inc.), and one kind or two or more kinds of these can be used in the ink composition of the invention, preferably at a proportion of 0.01% to 0.5% by mass.

In regard to the ink composition for inkjet recording, the pH of the composition is preferably adjusted to 6 to 11, and more preferably to 7 to 10, from the viewpoint of increasing the print density and liquid stability. In order to adjust the pH of the ink composition to be in the range described above, it is preferable that an inorganic alkali such as sodium hydroxide, potassium hydroxide, or lithium hydroxide; or a tertiary amine having 6 to 10 carbon atoms, such as ammonia, triethanolamine, ethyldiethanolamine, diethylethanolamine, or tripropanolamine, is incorporated into the ink composition as a pH adjusting agent. Regarding the pH adjusting agent, one kind or two or more kinds thereof can be used in the ink composition of the invention, preferably at a proportion of 0.01% to 2% by mass.

In regard to the inkjet recording method of the invention, any method capable of jetting an ink as liquid droplets through fine nozzles and attaching the liquid droplets to a recording medium can be used.

Some of them will be explained. First, there is an electrostatic attraction method. This method includes a method in which a strong electric field is applied between a nozzle and an accelerating electrode placed in front of the nozzle, an ink is continuously sprayed in the form of liquid droplets through the nozzle, and recording is achieved by transmitting printing information signals to deflecting electrodes while the ink droplets fly between the deflecting electrodes; or a method in which ink droplets are sprayed in accordance with the printing information signals without deflecting.

A second method is a method in which pressure is applied by a small-sized pump to an ink liquid, a nozzle is mechanically vibrated using a quartz resonator or the like, and thereby ink droplets are forcibly sprayed. The sprayed ink droplets are electrically charged simultaneously with spraying, and while ink droplets fly between deflecting electrodes, recording is achieved by transmitting printing information signals to the deflecting electrodes.

A third method is a method that uses a piezoelectric element, in which pressure and printing information signals are simultaneously applied to an ink using a piezoelectric element, and spraying and recording of ink droplets is achieved.

A fourth method is a method in which an ink is rapidly expanded in volume by the action of thermal energy, and is a method in which an ink is heated to foam by means of microelectrodes according to the printing information signals, and ink droplets are sprayed and recorded.

All of the methods described above can be used as inkjet recording methods using an ink composition. By applying the ink composition for inkjet recording of the invention, excellent jetting stability and nozzle clogging properties can be realized in any of the inkjet recording methods.

The recorded material of the invention is a product obtained by performing inkjet recording at least by using the ink composition described above. This recorded material exhibits enhanced fixability of the ink, in particular, the pigment in the ink and can form images of characters, figures, and the like having excellent density, scratch resistance and glossiness, by using the ink composition of the invention.

### EXAMPLES

Hereinafter, the present invention will be described more specifically by way of Examples. The materials, use amounts, proportions, treatment specifications, treatment procedures, and the like disclosed in the following Examples can be modified as appropriate, as long as the gist of the invention is maintained. Therefore, the scope of the invention is not intended to be limited to the specific examples disclosed below. Meanwhile, unless particularly stated otherwise, the units "parts" and "percent (%)" are on a mass basis.

An X-ray diffraction analysis of the azo pigment of the invention was carried out according to the Japanese Industrial Standards JIS K0131 (General rules for X-ray diffraction analysis), using CuKα radiation with an X-ray powder diffraction analyzer RINT2500 (manufactured by Rigaku Corporation) under the following conditions.

Analyzer used: automated X-ray diffraction apparatus, RINT2500, manufactured by Rigaku Corporation
X-ray tube: Cu
Tube voltage: 55 kV
Tube current: 280 mA
Scan method: 2θ/θ scan
Scan rate: 6 deg./min
Sampling interval: 0.100 deg.
Start angle (2θ): 5 deg.
Stop angle (2θ): 55 deg.
Divergence slit: 2 deg.
Scattering slit: 2 deg.
Receiving slit: 0.6 mm

Vertical type goniometer was used.

The pigment dispersants used in Examples and Comparative Examples were as follows.
- EFKA 4560 (manufactured by BASF SE, acid value: 0 mg KOH/g, amine value: 22 mg KOH/g, solid content: 40% by mass)
- EFKA 4580 (manufactured by BASF SE, acid value: 0 mg KOH/g, amine value: 16 mg KOH/g, solid content: 40% by mass)
- EFKA 4585 (manufactured by BASF SE, acid value: 0 mg KOH/g, amine value: 20 mg KOH/g, solid content: 50% by mass)
- EFKA 5071 (manufactured by BASF SE, acid value: 80 mg KOH/g, amine value: 95 mg KOH/g, solid content: 53% by mass)
- DISPERBYK-184 (manufactured by BYK Chemie GmbH, acid value: 0 mg KOH/g, amine value: 14 mg KOH/g, solid content: 52% by mass)
- DISPERBYK-181 (manufactured by BYK Chemie GmbH, acid value: 30 mg KOH/g, amine value: 0 mg KOH/g, solid content: 63% by mass)
- DISPERBYK-180 (manufactured by BYK Chemie GmbH, acid value: 95 mg KOH/g, amine value: 95 mg KOH/g, solid content: 79% by mass)
- DISPERBYK-187 (manufactured by BYK Chemie GmbH, acid value: 35 mg KOH/g, amine value: 35 mg KOH/g, solid content: 70% by mass)
- DISPERBYK-190 (manufactured by BYK Chemie GmbH, acid value: 10 mg KOH/g, amine value: 0 mg KOH/g, solid content: 40% by mass)
- DISPERBYK-2090 (manufactured by BYK Chemie GmbH, acid value: 60 mg KOH/g, amine value: 0 mg KOH/g, solid content: 81% by mass)
- SOLSPERSE 27000 (manufactured by Lubrizol Japan, Ltd., OH value: 1,005 mg KOH/g)
- Sodium oleate (manufactured by Wako Pure Chemical Industries, Ltd.)

### [Synthesis Example 1] Synthesis of azo pigment (1) of invention

An azo pigment represented by Formula (1) having a δ-type crystal form (hereinafter, may be simply referred to as "azo pigment" or "pigment") can be synthesized by the following method.

That is, the production method of the invention can be easily induced from a process of subjecting a diazonium salt derived from a heterocyclic amine represented by the following Formula (2) and a compound represented by the following Formula (3) (coupling component) to an azo-coupling reaction.

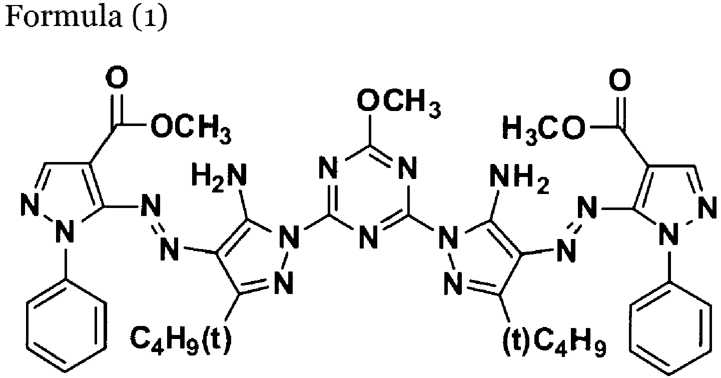

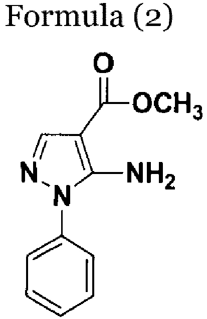

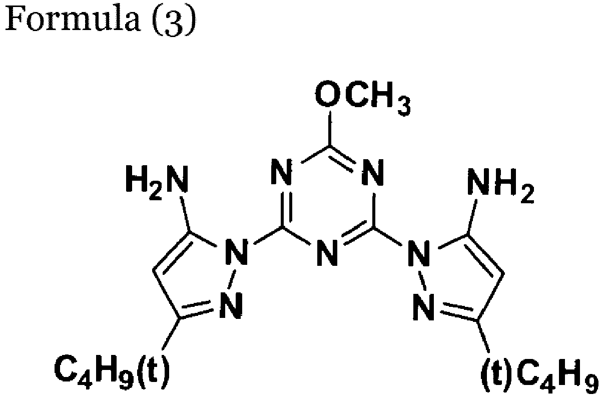

2.2 g of sodium nitrite was dissolved in 50 mL of water. Separately, 5.8 g of the amino compound represented by Formula (2) was dissolved in 50 mL of concentrated hydrochloric acid, and then the solution was cooled to an internal temperature of -10°C. The aqueous solution of sodium nitrite previously produced was added dropwise into this hydrochloric acid solution such that the internal temperature reached 0°C. The mixture was stirred for one hour at an internal temperature of -10°C to 0°C for one hour, and then 1.8 g of urea was added thereto at an internal temperature of 0°C or lower. After completion of the addition, the mixture was stirred for 15 minutes at the same temperature, and thus a diazonium salt solution was obtained. Separately, 5 g of the compound of Formula (3) was added to 175 mL of methanol, subsequently the temperature was increased, and the compound was dissolved under reflux. This solution was cooled to an internal temperature of 0°C, and the diazonium salt solution previously produced was added thereto such that the internal temperature reached 10°C. The mixture was stirred for one hour at an internal temperature of 10°C, and then a solid that had precipitated therein was separated by filtration. The solid was rinsed out with methanol and water over 10 minutes, and then was suspended in 300 mL of water. A 28% aqueous solution of ammonia was added thereto, and the pH was adjusted to 6.0. A solid precipitated therein was separated by filtration and was rinsed out with water over 10 minutes. The solid was dried at 60°C, and thus 9.8 g of an amorphous azo compound (1)-1 was obtained. The length in the major axis direction of the primary particles of the azo compound (1)-1 thus obtained was about 0.5 µm.

An X-ray diffraction analysis of azo compound (1)-1 was carried out under the conditions described above, and characteristic X-ray diffraction peaks were not observed.

5 g of the amorphous azo compound (1)-1 thus obtained was suspended in 50 mL of ethylene glycol. The internal temperature was raised up to 100°C, and then the suspension was stirred for 2 hours at the same temperature. The suspension was cooled to an internal temperature of 30°C, and then a solid precipitated therein was separated by filtration. Thus, 4.5 g of an azo pigment (1) of the invention in a crystal form was obtained.

The length in the major axis direction of the primary particles of the azo pigment (1) thus obtained was about 0.6 µm.

An X-ray diffraction analysis of the azo pigment (1) thus obtained was carried out under the conditions described above, and characteristic X-ray diffraction peaks were shown at Bragg's angles (2θ ± 0.2°) of 4.8°, 7.2°, 9.7°, 20.0°, 17.3°, 18.9°, 26.0°, and 26.7°.

A CuKα characteristic X-ray diffraction diagram is shown in Fig. 1.

### <Production of pigment dispersion 1>

10.0 parts of azo pigment (1), 5.0 parts of EFKA 4585 (solid content concentration: 50% by mass) manufactured by BASF SE, 4.0 parts of DISPERBYK-181 (solid content concentration: 63% by mass) manufactured by BYK Chemie GmbH, and 75.5 parts of water were mixed, and the mixture was dispersed at 45°C at a speed of 1,500 rotations per minute using a sand grinder mill, TSG1 (manufactured by Aimex Co., Ltd.), together with 375 parts of zirconia beads having a diameter of 0.1 mm. Dispersing was performed until the volume average particle size Mv reached 100 nm or less, and then the zirconia beads were separated. Thus, 80 parts of pigment dispersion 1 having a pigment concentration of 10.0% was obtained. Meanwhile, the pigment concentration is expressed in percent (%) by mass, and the same applies hereinafter.

### <Production of pigment dispersion 2>

10.0 parts of azo pigment (1), 5.0 parts of EFKA 4585 (solid content concentration: 50% by mass) manufactured by BASF SE, 1.0 part of DISPERBYK-181 (solid content concentration: 63% by mass) manufactured by BYK Chemie GmbH, and 84.0 parts of water were mixed, and the mixture was dispersed at 45°C at a speed of 1,500 rotations per minute using a sand grinder mill, TSG1 (manufactured by Aimex Co., Ltd.), together with 375 parts of zirconia beads having a diameter of 0.1 mm. Dispersing was performed until the volume average particle size Mv reached 100 nm or less, and then the zirconia beads were separated. Thus, 95 parts of pigment dispersion 2 having a pigment concentration of 10.2% was obtained.

### <Production of pigment dispersion 3>

10.0 parts of azo pigment (1), 4.5 parts of EFKA 4585 (solid content concentration: 50% by mass) manufactured by BASF SE, 1.0 part of DISPERBYK-181 (solid content concentration: 63% by mass) manufactured by BYK Chemie GmbH, and 84.5 parts of water were mixed, and the mixture was dispersed at 45°C at a speed of 1,500 rotations per minute using a sand grinder mill, TSG1 (manufactured by Aimex Co., Ltd.), together with 375 parts of zirconia beads having a diameter of 0.1 mm. Dispersing was performed until the volume average particle size Mv reached 100 nm or less, and then the zirconia beads were separated. Thus, 88 parts of pigment dispersion 3 having a pigment concentration of 10.1% was obtained.

### <Production of pigment dispersion 4>

10.0 parts of azo pigment (1), 4.0 parts of EFKA 4585 (solid content concentration: 50% by mass) manufactured by BASF SE, 1.5 parts of DISPERBYK-181 (solid content concentration: 63% by mass) manufactured by BYK Chemie GmbH, and 84.5 parts of water were mixed, and the mixture was dispersed at 45°C at a speed of 1,500 rotations per minute using a sand grinder mill, TSG1 (manufactured by Aimex Co., Ltd.), together with 375 parts of zirconia beads having a diameter of 0.1 mm. Dispersing was performed until the volume average particle size Mv reached 100 nm or less, and then the zirconia beads were separated. Thus, 85 parts of pigment dispersion 4 having a pigment concentration of 10.2% was obtained.

### <Production of pigment dispersion 5>

10.0 parts of azo pigment (1), 5.0 parts of EFKA 4585 (solid content concentration: 50% by mass) manufactured by BASF SE, 3.2 parts of DISPERBYK-180 (solid content concentration: 79% by mass) manufactured by BYK Chemie GmbH, and 80.0 parts of water were mixed, and the mixture was dispersed at 45°C at a speed of 1,500 rotations per minute using a sand grinder mill, TSG1 (manufactured by Aimex Co., Ltd.), together with 375 parts of zirconia beads having a diameter of 0.1 mm. Dispersing was performed until the volume average particle size Mv reached 100 nm or less, and then the zirconia beads were separated. Thus, 78 parts of pigment dispersion 5 having a pigment concentration of 10.1% was obtained.

### <Production of pigment dispersion 6>

10.0 parts of azo pigment (1), 6.0 parts of EFKA 4585 (solid content concentration: 50% by mass) manufactured by BASF SE, 1.9 parts of EFKA 5071 (solid content concentration: 53% by mass) manufactured by BASF SE, and 81.5 parts of water were mixed, and the mixture was dispersed at 45°C at a speed of 1,500 rotations per minute using a sand grinder mill, TSG1 (manufactured by Aimex Co., Ltd.), together with 375 parts of zirconia beads having a diameter of 0.1 mm. Dispersing was performed until the volume average particle size Mv reached 100 nm or less, and then the zirconia beads were separated. Thus, 80 parts of pigment dispersion 6 having a pigment concentration of 10.0% was obtained.

### <Production of pigment dispersion 7>

10.0 parts of azo pigment (1), 4.0 parts of EFKA 4585 (solid content concentration: 50% by mass) manufactured by BASF SE, 2.9 parts of DISPERBYK-187 (solid content concentration: 70% by mass) manufactured by BYK Chemie GmbH, and 84.1 parts of water were mixed, and the mixture was dispersed at 45°C at a speed of 1,500 rotations per minute using a sand grinder mill, TSG1 (manufactured by Aimex Co., Ltd.), together with 375 parts of zirconia beads having a diameter of 0.1 mm. Dispersing was performed until the volume average particle size Mv reached 100 nm or less, and then the zirconia beads were separated. Thus, 86 parts of pigment dispersion 7 having a pigment concentration of 9.9% was obtained.

### <Production of pigment dispersions 8 to 16>

Pigment dispersions 8 to 16 were produced in the same manner, by combining dispersants as described in the following Table 1.

### <Production of pigment dispersion 17>

Pigment dispersion 1 was heated to 60°C for one hour, and pigment dispersion 17 was obtained.

### <Production of pigment dispersion 18>

To 80 parts of pigment dispersion 2, 4 parts of an ion exchange resin (AMBERLITE MB-2 manufactured by Organo Corporation) was added, and the mixture was stirred for about 4 hours. The electrical conductivity was adjusted to 10 µS/cm or less, and then the ion exchange resin was removed. Subsequently, the pH was adjusted to 9.0 by adding triisopropanolamine (manufactured by Wako Pure Chemical Industries, Ltd.) thereto, and thus pigment dispersion 18 was obtained.

### <Production of pigment dispersion 19>

To 80 parts of pigment dispersion 9, 4 parts of an ion exchange resin (AMBERLITE MB-2 manufactured by Organo Corporation) was added, and the mixture was stirred for about 4 hours. The electrical conductivity was adjusted to 10 µS/cm or less, and then the ion exchange resin was removed. Subsequently, the pH was adjusted to 9.0 by adding triisopropanolamine thereto, and thus pigment dispersion 19 was obtained.

**[Table 1]**

| | Pigment | Component 1 | | Component 2 | | Component 3 | | Water | Pigment concentration |
|---|---|---|---|---|---|---|---|---|---|
| | Amount (parts) | Dispersant | Amount (parts) | Dispersant | Amount (parts) | Dispersant | Amount (parts) | Amount (parts) | |
| Pigment dispersion 1 | 10 | EFKA4585 | 5.0 | DISPERBYK-181 | 4.0 | | | 75.5 | 10.0% |
| Pigment dispersion 2 | 10 | EFKA4585 | 5.0 | DISPERBYK-181 | 1.0 | | | 84.0 | 10.2% |
| Pigment dispersion 3 | 10 | EFKA4585 | 4.5 | DISPERBYK-181 | 1.0 | | | 84.5 | 10.1% |
| Pigment dispersion 4 | 10 | EFKA4585 | 4.0 | DISPERBYK-181 | 1.5 | | | 84.5 | 10.2% |
| Pigment dispersion 5 | 10 | EFKA4585 | 5.0 | DISPERBYK-180 | 3.2 | | | 80.0 | 10.1% |
| Pigment dispersion 6 | 10 | EFKA4585 | 6.0 | EFKA 5071 | 1.9 | | | 81.5 | 10.0% |
| Pigment dispersion 7 | 10 | EFKA4585 | 4.0 | DISPERBYK-187 | 2.9 | | | 84.1 | 9.9% |
| Pigment dispersion 8 | 10 | DISPERBYK-181 | 4.0 | EFKA4580 | 6.3 | | | 77.5 | 10.0% |
| Pigment dispersion 9 | 10 | DISPERBYK -184 | 4.8 | DISPERBYK-187 | 3.6 | | | 81.1 | 10.1% |
| Pigment dispersion 10 | 10 | EFKA 5071 | 4.7 | SOLSPERSE27000 | 2.5 | | | 83.0 | 9.8% |
| Pigment dispersion 11 | 10 | EFKA 5071 | 3.8 | DISPERBYK-2090 | 2.5 | | | 83.0 | 10.0% |
| Pigment dispersion 12 | 10 | DISPERBYK-2090 | 3.1 | SOLSPERSE27000 | 2.0 | | | 83.5 | 10.1% |
| Pigment dispersion 13 | 10 | EFKA 4560 | 8.8 | DISPERBYK-187 | 5.0 | | | 75.9 | 9.8% |
| Pigment dispersion 14 | 10 | EFKA 4560 | 8.8 | DISPERBYK-190 | 2.5 | | | 77.5 | 10.1% |
| Pigment dispersion 15 | 10 | EFKA4585 | 4.0 | DISPERBYK-181 | 4.0 | SOLSPERSE27000 | 0.5 | 80.5 | 10.0% |
| Pigment dispersion 16 | 10 | EFKA4585 | 6.0 | Sodium oleate | 2.0 | | | 80.3 | 9.9% |

### <Production of comparative pigment dispersion 1>

10 parts of azo pigment (1), 3 parts of sodium oleate, 10 parts of glycerin, and 77 parts of water were mixed, and the mixture was dispersed at 45°C at a speed of 1,500 rotations per minute using a sand grinder mill, TSG1 (manufactured by Aimex Co., Ltd.), together with 375 parts of zirconia beads having a diameter of 0.1 mm. Dispersing was performed until the volume average particle size Mv reached 100 nm or less, and then the zirconia beads were separated. Thus, 75 parts of comparative pigment dispersion 1 having a pigment concentration of 10.1% was obtained.

### <Production of comparative pigment dispersion 2>

80 parts of comparative pigment dispersion 2 having a pigment concentration of 10.0% was obtained by a similar operation, except that in connection with the production of pigment dispersion 1, azo pigment (1) was changed to P.Y. 74.

### <Production of comparative pigment dispersion 3>

10.0 parts of azo pigment (1), 10.0 parts of EFKA 4585 (solid content concentration: 50% by mass) manufactured by BASF SE, and 45.0 parts of water were mixed, and the mixture was dispersed at 45°C at a speed of 1,500 rotations per minute using a sand grinder mill, TSG1 (manufactured by Aimex Co., Ltd.), together with 375 parts of zirconia beads having a diameter of 0.1 mm. Dispersing was performed until the volume average particle size Mv reached 100 nm or less, and then the zirconia beads were separated. Thus, 53 parts of comparative pigment dispersion 3 having a pigment concentration of 15.0% was obtained.

### <Production of comparative pigment dispersion 4>

10.0 parts of azo pigment (1), 7.9 parts of DISPERBYK-181 (solid content concentration: 63% by mass) manufactured by BYK Chemie GmbH, and 47.2 parts of water were mixed, and the mixture was dispersed at 45°C at a speed of 1,500 rotations per minute using a sand grinder mill, TSG1 (manufactured by Aimex Co., Ltd.), together with 375 parts of zirconia beads having a diameter of 0.1 mm. Dispersing was performed until the volume average particle size Mv reached 100 nm or less, and then the zirconia beads were separated. Thus, 55 parts of comparative pigment dispersion 4 having a pigment concentration of 15.3% was obtained.

### <Production of comparative pigment dispersion 5>

10.0 parts of azo pigment (1), 6.3 parts of DISPERBYK-180 (solid content concentration: 79% by mass) manufactured by BYK Chemie GmbH, and 50.0 parts of water were mixed, and the mixture was dispersed at 45°C at a speed of 1,500 rotations per minute using a sand grinder mill, TSG1 (manufactured by Aimex Co., Ltd.), together with 375 parts of zirconia beads having a diameter of 0.1 mm. Dispersing was performed until the volume average particle size Mv reached 100 nm or less, and then the zirconia beads were separated. Thus, 58 parts of comparative pigment dispersion 5 having a pigment concentration of 15.3% was obtained.

### <Production of comparative pigment dispersion 6>

10.0 parts of azo pigment (1), 9.6 parts of DISPERBYK-184 (solid content concentration: 52% by mass) manufactured by BYK Chemie GmbH, and 46.0 parts of water were mixed, and the mixture was dispersed at 45°C at a speed of 1,500 rotations per minute using a sand grinder mill, TSG1 (manufactured by Aimex Co., Ltd.), together with 375 parts of zirconia beads having a diameter of 0.1 mm. Dispersing was performed until the volume average particle size Mv reached 100 nm or less, and then the zirconia beads were separated. Thus, 56 parts of comparative pigment dispersion 6 having a pigment concentration of 14.8% was obtained.

### <Production of comparative pigment dispersion 7>

10.0 parts of azo pigment (1), 9.4 parts of EFKA 5071 (solid content concentration: 53% by mass) manufactured by BASF SE, and 45.1 parts of water were mixed, and the mixture was dispersed at 45°C at a speed of 1,500 rotations per minute using a sand grinder mill, TSG1 (manufactured by Aimex Co., Ltd.), together with 375 parts of zirconia beads having a diameter of 0.1 mm. Dispersing was performed until the volume average particle size Mv reached 100 nm or less, and then the zirconia beads were separated. Thus, 53 parts of comparative pigment dispersion 7 having a pigment concentration of 15.0% was obtained.

### <Production of comparative pigment dispersion 8>

10.0 parts of azo pigment (1), 6.2 parts of DISPERBYK-2090 (solid content concentration: 81% by mass) manufactured by BYK Chemie GmbH, and 48.3 parts of water were mixed, and the mixture was dispersed at 45°C at a speed of 1,500 rotations per minute using a sand grinder mill, TSG1 (manufactured by Aimex Co., Ltd.), together with 375 parts of zirconia beads having a diameter of 0.1 mm. Dispersing was performed until the volume average particle size Mv reached 100 nm or less, and then the zirconia beads were separated. Thus, 55 parts of comparative pigment dispersion 8 having a pigment concentration of 15.5% was obtained.

### <Production of comparative pigment dispersion 9>

10.0 parts of azo pigment (1), 12.5 parts of DISPERBYK-190 (solid content concentration: 40% by mass) manufactured by BYK Chemie GmbH, and 42.9 parts of water were mixed, and the mixture was dispersed at 45°C at a speed of 1,500 rotations per minute using a sand grinder mill, TSG1 (manufactured by Aimex Co., Ltd.), together with 375 parts of zirconia beads having a diameter of 0.1 mm. Dispersing was performed until the volume average particle size Mv reached 100 nm or less, and then the zirconia beads were separated. Thus, 60 parts of comparative pigment dispersion 9 having a pigment concentration of 15.1% was obtained.

### (Production of pigment ink)

### <Production of pigment ink I>

Water was added to each of pigment dispersions 1 to 19 of Examples and pigment dispersions 1 to 9 of Comparative Examples as described above, such that the total mass was 10.88 parts, and the pigment concentration was 6.90%. To that mixture, a mixed solution of 0.45 parts of 2-pyrrolidinone, 2.25 parts of glycerol, 0.60 parts of 1,2-hexanediol, 0.75 parts of ethylene glycol, and 0.08 parts of SURFINOL 465 was added, and the resulting mixture was stirred sufficiently. Thus, pigment inks I-1 to I-19 and comparative pigment inks I-1 to I-9, all having a pigment concentration of 5% by mass, were obtained.

### <Production of pigment ink II>

Water was added to each of pigment dispersions 1 to 19 of Examples and pigment dispersions 1 to 9 of Comparative Examples as described above, such that the total mass was 11.15 parts, and the pigment concentration was 6.73%. To that mixture, a mixed solution of 1.50 parts of triethylene glycol monobutyl ether, 2.25 parts of ethylene glycol, and 0.11 parts of SURFINOL 485 was added, and the resulting mixture was stirred sufficiently. Thus, pigment inks II-1 to II-19 and comparative pigment inks II-1 to II-9, all having a pigment concentration of 5% by mass, were obtained.

### (Evaluation)

### <Storage stability>

Pigment dispersions 1 to 19 and pigment dispersions 1 to 9 of Comparative Examples, pigment inks I-1 to I-19 and comparative pigment inks I-1 to I-9, pigment inks II-1 to II-19 and comparative pigment inks II-1 to II-9 as described above were respectively left to stand for 4 weeks at 60°C.

### [Viscosity]

The viscosities of the pigment dispersions and pigment inks that had been left to stand for 4 weeks were measured (measured using a RE80L type viscometer manufactured by Toki Sangyo Co., Ltd. under the conditions of 25°C and 100 rpm). A sample having a change ratio of 5% or less was rated as A; a sample having a change ratio of more than 5% and less than 10% was rated as B; a sample having a change ratio of 10% or more and less than 15% was rated as C; and a sample having a change ratio of 15% or more was rated as D.

### [Surface tension]

The surface tensions of the pigment dispersions and pigment inks that had been left to stand for 4 weeks were measured (measured at 25°C using an automated surface tensiometer CBVP-A3). A sample having a change ratio of 5% or less was rated as A; a sample having a change ratio of more than 5% and less than 10% was rated as B; a sample having a change ratio of 10% or more and less than 15% was rated as C; and a sample having a change ratio of 15% or more was rated as D.

### [Particle size]

The volume average particle sizes of the pigment dispersions and the pigment inks were measured before and after being left to stand for 4 weeks (measured using a Nanotrac 150 (UPA-EX150) manufactured by Nikkiso Co., Ltd.). A sample having a change ratio of 10% or less for the volume average particle sizes obtained before and after being left to stand for 4 weeks was rated as A; a sample having a change ratio of more than 10% and less than 15% was rated as B; a sample having a change ratio of 15% or more and less than 20% was rated as C; and a sample having a change ratio of 20% or more was rated as D.

### (Image fastness)

The water-based inks were produced into yellow inks, and for each of the inks, printing was performed using a commercially available inkjet printer manufactured by Seiko Epson, Inc. (product No.: PX-V630), on photographic paper (KASSAI) manufactured by Fujifilm Corporation so as to obtain an OD value of 1.0. The images were irradiated with xenon light (100,000 Lux) for 5 weeks using a weather meter manufactured by Atlas Material Testing Technology LLC. The OD values were measured before and after the test using an X-RITE 310, and the residual ratio of OD was determined and evaluated. A sample having a residual ratio of 90% or higher was rated as A; a sample having a residual ratio of lower than 90% and 80% or higher was rated as B; and a sample having a residual ratio of lower than 80% was rated as C.

**[Table 2]**

| | Pigment dispersion | | | Pigment ink I | | | | Pigment ink II | | | |
|---|---|---|---|---|---|---|---|---|---|---|---|
| | Storage stability | | | Storage stability | | | Image fastness | Storage stability | | | Image fastness |
| | Viscosity | Surface tension | Particle size | Viscosity | Surface tension | Particle size | | Viscosity | Surface tension | Particle size | |
| Pigment dispersion 1 | A | A | A | A | A | A | A | A | B | C | A |
| Pigment dispersion 2 | A | A | A | A | A | A | A | A | B | C | A |
| Pigment dispersion 3 | A | A | A | A | A | A | A | A | B | C | A |
| Pigment dispersion 4 | A | A | A | A | A | A | A | A | B | C | A |
| Pigment dispersion 5 | A | A | B | B | A | A | A | B | A | C | A |
| Pigment dispersion 6 | A | A | A | B | B | B | A | B | B | C | A |
| Pigment dispersion 7 | A | A | B | A | A | B | A | A | A | C | A |
| Pigment dispersion 8 | A | A | B | A | A | B | A | A | A | C | A |
| Pigment dispersion 9 | A | A | B | A | A | B | A | A | A | C | A |
| Pigment dispersion 10 | B | B | B | B | B | B | A | B | B | C | A |
| Pigment dispersion 11 | A | A | B | A | A | A | A | A | A | C | A |
| Pigment dispersion 12 | A | B | A | B | B | B | A | B | B | C | A |
| Pigment dispersion 13 | A | A | B | A | A | A | A | A | A | C | A |
| Pigment dispersion 14 | A | A | B | A | A | B | A | A | B | C | A |
| Pigment dispersion 15 | A | A | B | A | A | A | A | A | B | C | A |
| Pigment dispersion 16 | A | A | A | A | A | B | A | A | B | B | A |
| Pigment dispersion 17 | A | A | A | A | A | B | A | A | A | B | A |
| Pigment dispersion 18 | A | A | A | A | A | B | A | A | A | A | A |
| Pigment dispersion 19 | A | A | B | A | A | B | A | A | A | C | A |
| Comparative pigment dispersion 1 | A | B | C | C | C | D | B | C | C | D | B |
| Comparative pigment dispersion 2 | D | C | C | D | D | C | C | D | C | C | C |
| Comparative pigment dispersion 3 | C | C | C | D | C | C | A | D | C | D | A |
| Comparative pigment dispersion 4 | C | B | B | D | D | C | A | D | C | D | A |
| Comparative pigment dispersion 5 | C | C | C | D | C | D | A | C | C | D | A |
| Comparative pigment dispersion 6 | D | C | C | D | D | C | A | D | C | D | A |
| Comparative pigment dispersion 7 | C | B | C | C | C | D | A | D | C | D | A |
| Comparative pigment dispersion 8 | D | C | D | D | C | D | A | D | C | D | A |
| Comparative pigment dispersion 9 | D | D | D | D | D | D | A | D | D | D | A |

### (Synthesis of fine azo pigment (2))

Azo pigment (1) thus obtained was subjected to salt milling, and fine azo pigment (2) having a length of 0.03 µm in the major axis direction of the primary particles was obtained. Salt milling was performed by the following method.

Azo pigment (1) and table salt were introduced into a SUPERMIXER so as to obtain the following composition, and the mixture was mixed. While the SUPERMIXER was rotated, diethylene glycol was added in small amounts, and a mixture (hereinafter, may be referred to as "preliminary mixture") was prepared.
- Azo pigment (1): 150 parts
- Table salt (manufactured by Ako Kasei Co., Ltd., OSHIO MICRON T-0): 1,500 parts
- Diethylene glycol: 300 parts

Subsequently, the temperature at five sites of a grinding unit and an extrusion unit of a continuous uniaxial kneading machine (manufactured by Asada Iron Works Co., Ltd., MIRACLE KCK-L) was set to 15°C to 20°C, and the speed of axial rotation was set to 50 rpm. The preliminary mixture obtained as described above was introduced into the kneading machine, and a kneaded product was obtained. At this time, the current value (load) was about 4A, the jetting amount was 50 g/min, and the temperature of the jetted product was 16°C.

The kneaded product thus obtained was introduced into 5,000 parts of 1% dilute hydrochloric acid, and a stirring treatment was performed. Subsequently, filtration and sufficient washing with water were performed to remove the table salt and diethylene glycol. The residue was dried.

In regard to the production of the pigment dispersion, by using fine azo pigment (2) instead of azo pigment (1), pigment dispersions 101 to 110 were produced in the same manner, as described in Table 3.

**[Table 3]**

| | Pigment | Component 1 | | Component 2 | | Component 3 | | Water | Pigment concentration |
|---|---|---|---|---|---|---|---|---|---|
| | Amount (parts) | Dispersant | Amount (parts) | Dispersant | Amount (parts) | Dispersant | Amount (parts) | Amount (parts) | |
| Pigment dispersion 101 | 10 | EFKA4585 | 5.0 | DISPERBYK-181 | 4.0 | | | 75.5 | 10.2% |
| Pigment dispersion 102 | 10 | EFKA4585 | 5.0 | DISPERBYK-181 | 1.0 | | | 84.0 | 9.9% |
| Pigment dispersion 103 | 10 | EFKA4585 | 4.5 | DISPERBYK-181 | 1.0 | | | 84.5 | 10.0% |
| Pigment dispersion 104 | 10 | EFKA4585 | 4.0 | DISPERBYK-181 | 1.5 | | | 84.5 | 9.8% |
| Pigment dispersion 105 | 10 | EFKA4585 | 5.0 | DISPERBYK-180 | 3.2 | | | 80.0 | 10.1% |
| Pigment dispersion 106 | 10 | EFKA4585 | 6.0 | EFKA 5071 | 1.9 | | | 81.5 | 10.0% |
| Pigment dispersion 107 | 10 | DISPERBYK-184 | 4.8 | DISPERBYK-187 | 3.6 | | | 81.1 | 10.2% |
| Pigment dispersion 108 | 10 | EFKA 5071 | 3.8 | DISPERBYK-2090 | 2.5 | | | 83.0 | 9.9% |
| Pigment dispersion 109 | 10 | EFKA 4560 | 8.8 | DISPERBYK-187 | 5.0 | | | 75.9 | 10.2% |
| Pigment dispersion 110 | 10 | EFKA4585 | 4.0 | DISPERBYK-181 | 4.0 | SOLSPERSE27000 | 0.5 | 80.5 | 10.1% |

### <Production of pigment dispersion 111>

To 80 parts of pigment dispersion 102, 4 parts of an ion exchange resin (AMBERLITE MB-2 manufactured by Organo Corporation) was added, and the mixture was stirred for about 4 hours. The electrical conductivity was adjusted to 10 µS/cm or less, and then the ion exchange resin was removed. Subsequently, the pH was adjusted to 9.0 by adding triisopropanolamine thereto.

### (Production of pigment ink)

Pigment inks 1-101 to 1-111, and pigment inks II-101 to II-111 were respectively produced using pigment dispersion 101 to pigment dispersion 111, similarly to the cases of the above-described pigment ink I and pigment ink II that used pigment dispersion 1.

### (Evaluation)

Similarly to the cases of the pigment ink I-1 and pigment ink II-1, storage stability was evaluated using pigment dispersions 101 to 111, pigment inks 1-101 to I-111, and pigment inks II-101 to II-111. Furthermore, image fastness was evaluated using pigment inks 1-101 to I-111 and pigment inks II-101 to II-111.

The results are presented in the following Table 4.

**[Table 4]**

| | Pigment dispersion | | | Pigment ink I | | | | Pigment ink II | | | |
|---|---|---|---|---|---|---|---|---|---|---|---|
| | Storage stability | | | Storage stability | | | Image fastness | Storage stability | | | Image fastness |
| | Viscosity | Surface tension | Particle size | Viscosity | Surface tension | Particle size | | Viscosity | Surface tension | Particle size | |
| Pigment dispersion 101 | A | A | A | A | A | A | A | A | B | C | A |
| Pigment dispersion 102 | A | A | A | A | A | A | A | A | B | C | A |
| Pigment dispersion 103 | A | A | A | A | A | A | A | A | B | C | A |
| Pigment dispersion 104 | A | A | A | A | A | A | A | A | B | C | A |
| Pigment dispersion 105 | A | A | B | B | A | A | A | B | A | C | A |
| Pigment dispersion 106 | A | A | A | B | B | B | A | B | B | C | A |
| Pigment dispersion 107 | A | A | B | A | A | B | A | A | A | C | A |
| Pigment dispersion 108 | A | A | B | A | A | A | A | A | A | C | A |
| Pigment dispersion 109 | A | A | B | A | A | A | A | A | A | C | A |
| Pigment dispersion 110 | A | A | B | A | A | A | A | A | B | C | A |
| Pigment dispersion 111 | A | A | B | A | A | B | A | A | A | A | A |

As shown in Table 4, satisfactory results were obtained even in a case in which fine azo pigment (2) was used. Irrespective of whether azo pigment (1) that had not been subjected to salt milling was used, or fine azo pigment (2) that had been subjected to salt milling was used, the pigment dispersions and pigment inks prepared using those dispersions exhibited equivalent performance.

According to the invention, an aqueous pigment dispersion having excellent storage stability and image fastness, and a method for producing the same can be provided. Furthermore, a coloring composition, an ink composition, and an ink composition for inkjet recording, all of which use the aqueous pigment dispersion, and an inkjet recording method using the ink composition for inkjet recording can be provided.

The present invention has been described in detail with reference to particular embodiments; however, it is obvious to those ordinarily skilled in the art that various modifications or alterations can be applied without deviating from the spirit and the scope of the invention.

The present patent application is based on Japanese Patent Application (JP2015-189007) filed on September 25, 2015, the disclosure of which is incorporated herein by reference.

## Claims

1. An aqueous pigment dispersion, comprising:
at least one of an azo pigment represented by the following Formula (1) and showing characteristic X-ray diffraction peaks at least at Bragg's angles (2θ ± 0.2°) of 4.8°, 7.2°, 9.7°, 20.0°, 17.3°, 26.0°, and 26.7° in CuKα characteristic X-ray diffraction, and a tautomer thereof;
a first dispersant;
a second dispersant; and
water,
wherein the aqueous pigment dispersion is obtained via the following Step b:
Step b: a step of dispersing an azo pigment represented by Formula (1) and/or a tautomer thereof, a first dispersant, and a second dispersant in water and thereby obtaining an aqueous pigment dispersion,

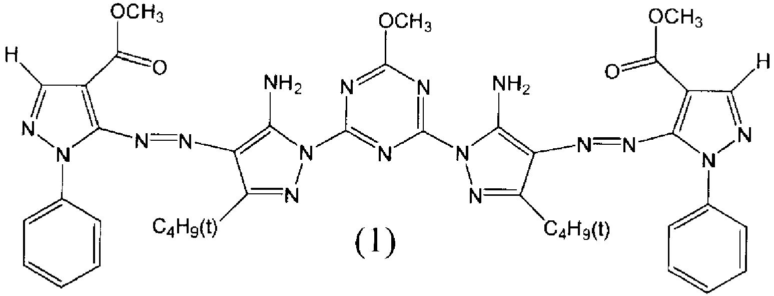

2. The aqueous pigment dispersion according to claim 1, wherein the aqueous pigment dispersion is obtained via Step a: a step of mixing at least one of the azo pigment represented by Formula (1) and a tautomer thereof, the first dispersant, the second dispersant, and water, before Step b.

3. The aqueous pigment dispersion according to claim 1 or 2, wherein at least one of the first dispersant or the second dispersant is a high molecular dispersant.

4. The aqueous pigment dispersion according to any one of claims 1 to 3, wherein
the first dispersant has an amine value of 5 mg KOH/g or more, with the amine value being larger than the acid value; and
the second dispersant is a long-chain fatty acid salt, or has an acid value of 5 mg KOH/g or more, with the acid value being larger than or equal to the amine value.

5. The aqueous pigment dispersion according to any one of claims 1 to 4, wherein the aqueous pigment dispersion is obtained further via Step c: a step of adjusting the electrical conductivity of the aqueous pigment dispersion to 100 µS/cm or less, after Step b.

6. The aqueous pigment dispersion according to any one of claims 1 to 5, wherein the aqueous dispersion comprises the dispersants in a total amount of 10 to 90 parts by mass with respect to 100 parts by mass of the content of at least one of the azo pigment represented by Formula (1) and a tautomer thereof.

7. The aqueous pigment dispersion according to any one of claims 1 to 6, wherein at least one of the azo pigment represented by Formula (1) and a tautomer thereof has not been treated by salt milling.

8. A method for producing an aqueous pigment dispersion, the method comprising at least the following Step b:
Step b: a step of dispersing at least one of an azo pigment represented by Formula (1) and a tautomer thereof, a first dispersant, and a second dispersant in water and thereby obtaining an aqueous pigment dispersion,

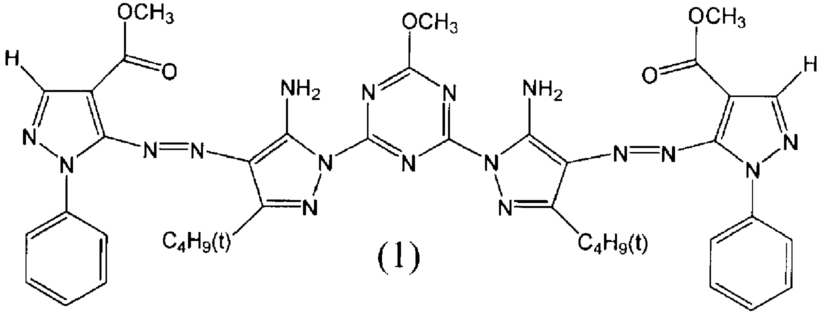

9. The method for producing an aqueous pigment dispersion according to claim 8, wherein the method comprises Step a: a step of mixing at least one of the azo pigment represented by Formula (1) and a tautomer thereof, the first dispersant, the second dispersant, and water, before Step b.

10. The method for producing an aqueous pigment dispersion according to claim 8 or 9, wherein
the first dispersant has an amine value of 5 mg KOH/g or more, with the amine value being larger than the acid value; and
the second dispersant is a long-chain fatty acid salt, or has an acid value of 5 mg KOH/g or more, with the acid value being larger than or equal to the amine value.

11. The method for producing an aqueous pigment dispersion according to any one of claims 8 to 10, further comprising: Step c: a step of adjusting the electrical conductivity of the aqueous pigment dispersion to 100 µS/cm or less, after Step b.

12. A coloring composition, comprising the aqueous pigment dispersion according to any one of claims 1 to 7.

13. An ink composition, comprising the aqueous pigment dispersion according to any one of claims 1 to 7.

14. The ink composition according to claim 13, wherein the ink composition is an ink composition for inkjet recording.

15. An inkjet recording method, comprising a step of jetting the ink composition for inkjet recording according to claim 14 onto a recording medium.
